# EUROPÄISCHE PATENTSCHRIFT

(11) **EP 2 361 282 B1**
(45) Veröffentlichungstag und Bekanntmachung des Hinweises auf die Patenterteilung: **21.02.2018**
(21) Anmeldenummer: 09795357.4
(22) Anmeldetag: 26.11.2009
(51) Int. Cl.: C08L 27/06, C08K 13/02, C08K 3/24, C08K 3/26, C08K 5/3432, C08K 5/3437, C08K 5/3492

(54) **SCHWERMETALLFREIE STABILISATORZUSAMMENSETZUNG FÜR HALOGENHALTIGE POLYMERE**
HEAVY METAL-FREE STABILIZER COMPOSITION FOR HALOGENATED POLYMERS
COMPOSITION DE STABILISATEUR EXEMPTE DE MÉTAUX LOURDS POUR POLYMÈRES HALOGÉNÉS

(30) Priorität: 26.11.2008 DE 102008058901
(43) Veröffentlichungstag der Anmeldung: 31.08.2011
(73) Patentinhaber: Chemson Polymer-Additive AG, 9601 Arnoldstein (AT)
(72) Erfinder: PELZL, Bernhard, A-8047 Graz (AT); SCHILLER, Michael, A-9601 Arnoldstein (AT); HUISMAN, Hendrik Willem, 6367BZ Voerendaal (NL)
(74) Vertreter: Viering, Jentschura & Partner mbB Patent- und Rechtsanwälte
(86) Internationale Anmeldenummer: PCT/EP2009/065926
(87) Internationale Veröffentlichungsnummer: WO 2010/060966

(56) Entgegenhaltungen:
- EP-A2- 0 677 550
- EP-A2- 1 466 941
- WO-A1-2006/136191

## Beschreibung

Die vorliegende Erfindung betrifft eine schwermetallfreie Stabilisatorzusammensetzung für halogenhaltige Polymere, deren Verwendung bei der Stabilisierung von halogenhaltigen Polymeren, insbesondere gegenüber unerwünschter Rosafärbung, sowie Formkörper, die diese Stabilisatorzusammensetzung enthalten.

Halogenhaltige Polymere bzw. Kunststoffe oder daraus hergestellte Formkörper neigen zu substantiellen Veränderungen während ihres Herstellungsverfahrens und aufgrund der Einwirkung von Umwelteinflüssen. Zum Beispiel kann sich diese Art von Kunststoffen unter Einfluss von Wärme und/oder Licht zersetzen oder verfärben. Zur Stabilisierung von halogenhaltigen Polymeren sind daher bereits verschiedenste Stoffe oder Stoffgemische verwendet worden.

Ein halogenhaltiges Polymer, wie z.B. Polyvinylchlorid (PVC), geht beim Schmelzverformen in eine Polyenstruktur über, wobei Salzsäure eliminiert und das Polymer verfärbt wird. Um die Thermostabilität des Polymers zu verbessern, ist es üblich, Metallcarboxylate als Stabilisatoren in das Harz einzuarbeiten. Da jedoch die Einarbeitung der Stabilisatoren allein bei einem längeren Schmelzformverfahren eine Schwärzung des Polymeren hervorruft, ist es allgemeine Praxis, einen Co-Stabilisator zuzusetzen. Es sind eine Vielzahl von Kombinationen aus anorganischen und organischen Verbindungen als Stabilisatoren für halogenhaltige Polymere bekannt. In den letzten Jahren sind jedoch verstärkt stickstoffhaltige Verbindungen als Stabilisatoren in den Markt gekommen. Stickstoffhaltige Stabilisatoren-Verbindungen sind ebenfalls in der Patentliteratur beschrieben worden.

Zum Beispiel beschreibt EP 1343838 die Verwendung von mindestens einem Perchlorat-Salz und einem Alkanolamin, die sowohl gegen Wärme als auch gegen Licht stabilisieren können.

EP 768 336 beschreibt eine Stabilisatorkombination, die ein Uracil und ein Perchlorat-Salz enthält. Derartige Kombinationen sind seit mehreren Jahren im Markt erhältlich und zeigen hervorragende Eigenschaften bei der Extrusion von PVC-Rohren. In PVC-Fensterprofilen und anderen Außenanwendungen, in denen eine Bewitterungsstabilität garantiert werden muß, haben sie sich nicht durchgesetzt, weil Vorbehalte des Marktes bzgl. einer Rosaverfärbung im Einsatz bestehen.

DE 10118179 beschreibt die Verwendung einer Kombination aus spezifischen Stickstoffverbindungen, die Strukturelemente von Aminocrotonaten und Uracilen enthalten, einem Alkanolamin und einem Perchlorat-Salz, die sich durch eine sehr gute stabilisierende Wirkung in halogenhaltigen Polymerisaten sowohl gegen oxidativen, thermischen als auch lichtinduzierten Abbau auszeichnen. Besonders bemerkenswert ist die farbstabilisierende Wirkung bei thermischer Belastung.

In JP 07062181 wurde herausgefunden, dass sich Systeme aus Zinnverbindungen, Tris(2-hydroxyethyl)isocyanurat (THEIC) und Perchlorat-Salzen besonders gut zur Stabilisierung von chlorhaltigen Polymeren, insbesondere PVC, eignen. Allerdings handelt es sich im Falle von Zinn um ein Schwermetall.

JP 05179090 wiederum beschreibt, dass sich Mischungen, aus mindestens THEIC und einem perchlorathaltigen Hydrotalcit in Gegenwart von Silikaten gut zur Stabilisierung von chlorhaltigen Polymeren, insbesondere PVC, eignen. Die angeführten Beispiele enthalten jedoch Metallseifen, die zumindest im Falle des Zinks ein Schwermetall enthalten.

JP 05295198 berichtet über Kombinationen aus THEIC und Perchlorat-Salzen oder perchlorathaltigen Hydrotalciten zur Stabilisierung von PVC. Auch hier enthalten die angeführten Beispiele Schwermetalle wie Barium und Zink.

WO 2006/136191 A1 beschreibt spezielle koordinationspolymere Triethanolaminperchlorato (triflato)-Metall-Inner-Komplexe als Additive für synthetische, insbesondere halogen-haltige Polymere.

EP 1 466 941 A2 beschreibt Kombinationen von Triethanolamin und Dihydropyridinen zur Thermostabilisierung von halogenhaltigen Polymeren.

Es hat sich gezeigt, dass es bei vielen aus dem Stand der Technik bekannten und mit Stickstoffverbindungen stabilisierten Polymeren, die zum Teil nur geringe Mengen an Titandioxid enthalten, im Sonnen- und auch bei künstlichem Licht zu einer Rosaverfärbung des Polymers kommt. Diese Rosaverfärbung hat bislang den Einsatz stickstoffhaltiger Verbindungen in Fensterprofilen verhindert. Die farbgebende Komponente dieser Rosaverfärbung lässt sich weder analysieren noch in geeigneter Menge simulativ herstellen, da die Veränderung der Farbe aus dem Abbau des halogenhaltigen Polymers nach komplexen und unbekannten Mechanismen resultiert, die nicht nur von der Art und Intensität der abbauenden Quellen abhängen, sondern auch von der Art und den Mengen jeder in der Polymerzusammensetzung enthaltenen Substanz, insbesondere zum Beispiel von den stickstoffhaltige Verbindungen oder TiO₂.

Der vorliegenden Erfindung liegt daher die Aufgabe zugrunde, neue, schwermetallfreie Stabilisatorzusammensetzungen bereitzustellen, die sich insbesondere für halogenhaltige Polymere eignen, ohne die oben erwähnten Nachteile der bekannten Stabilisatoren aufzuweisen.

Diese Aufgabe wird erfindungsgemäß gelöst durch die Bereitstellung einer auf Isocyanurat basierenden schwermetallfreien Stabilisatorzusammensetzung für halogenhaltige Polymere enthaltend mindestens ein Isocyanurat, mindestens ein Dihydropyridin und mindestens ein Perchloratsalz gemäß Anspruch 1.

Vorteilhafte Ausführungsformen davon sind in den abhängigen Ansprüchen wiedergegeben.

Überraschenderweise hat sich gezeigt, dass die erfindungsgemäßen, schwermetallfreien Stabilisatorzusammensetzungen halogenhaltigen Polymeren und den daraus hergestellten Teilen und Produkten eine erhöhte Stabilität gegenüber der Einwirkung von Sonnen- und Kunstlicht verleihen. Insbesondere kann eine Rosaverfärbung des halogenhaltigen Materials verhindert werden, wenn es in Applikationen, die im freien verwendet werden, zum Beispiel in Fensterprofilen, eingesetzt wird. Zudem hat sich gezeigt, dass sich durch Verwendung der erfindungsgemäßen schwermetallfreien Stabilisatorzusammensetzungen problemlos Formkörper aus halogenhaltigen Polymeren herstellen lassen, die eine optimale Performance im Gebrauch ermöglichen und die mit den Commodities zur PVC-Stabilisierung auf der Basis von schwermetallhaltigen Stabilisatorzusammensetzungen vergleichbar sind. Dieser stabilisierende Effekt tritt auch auf, wenn das halogenhaltige Polymer weitere Stabilisatoren, Co-Stabilisatoren oder Hilfsmittel enthält.

Zudem ist es mit den Stabilisatorzusammensetzungen der vorliegenden Erfindung möglich, gänzlich auf Schwermetallverbindungen zu verzichten und trotzdem eine gleichbleibende oder sogar bessere Stabilität der halogenhaltigen Polymere zu erreichen. Dadurch können eventuelle Belastungen für die Umwelt reduziert werden und Kosten für, zum Beispiel, aufwendige Entsorgung vermieden werden. "schwermetallfrei" im Sinne der vorliegenden Erfindung bedeutet, dass alle Elemente mit einer Dichte > 4.51 g/cm³ (bei 20°C) nicht in der Stabilisatorzusammensetzung vorhanden sind. In einer weiteren Ausführungsform umfasst der Begriff Schwermetall zusätzlich die Elemente Strontium und Barium.

Gegenstand der vorliegenden Erfindung ist ebenfalls die Verwendung der erfindungsgemäßen schwermetallfreien Stabilisatorzusammensetzung zur Stabilisierung von halogenhaltigen Polymeren, sowie Formkörper aus diesen halogenhaltigen Polymeren, die eine schwermetallfreie Stabilisatorzusammensetzung gemäß der Erfindung enthalten.

Kurze Beschreibung der Zeichnungen:
Figur 1 zeigt die Änderung der Gesamtfarbe ΔE eines halogenhaltigen Polymers in Abhängigkeit von der Bewitterung im Xenotest.
Figur 2 veranschaulicht ein Diagramm zur Bestimmung und Archivierung einer Farbe.
Figur 3 veranschaulicht den angenommenen Wirkmechanismus von THEIC in PVC als Säurefänger.

Die vorliegende Erfindung wird nachstehend näher beschrieben.

Die auf Isocyanurat basierende Stabilisatorzusammensetzung der vorliegenden Erfindung kann für halogenhaltige Polymere verwendet werden. Beispiele für solche halogenhaltigen Polymere können thermoplastische halogenhaltige Polymere sein, beispielsweise, ohne darauf beschränkt zu sein, Polyvinylchlorid (PVC), Polyvinylidenchlorid, chloriertes oder chlorsulfoniertes Polyethylen, chloriertes Polypropylen oder chloriertes Ethylen/Vinylacetat-Copolymer oder ähnliche Verbindungen. Besonders vorteilhaft sind Polymere vom PVC-Typ, d.h. Vinylchlorid-Homopolymere und Copolymere von Vinylchlorid mit anderen Monomeren.

Die schwermetallfreien Stabilisatorzusammensetzungen für halogenhaltige Polymere gemäß der vorliegenden Erfindung enthalten mindestens ein Isocyanurat. Das mindestens eine Isocyanurat wird aus den Verbindungen der Formel (I) 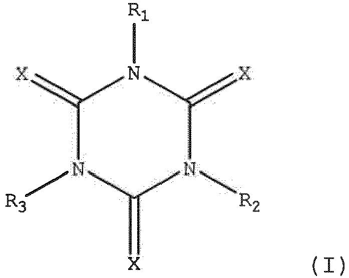 ausgewählt. In Formel (I) bedeuten R₁, R₂ und R₃ unabhängig voneinander Wasserstoff, optional substituiertes C₁-C₁₈ Alkyl, optional substituiertes C₂-C₆ Alkenyl, optional substituiertes C₁-C₄ Alkoxy, optional substituiertes C₅-C₈ Cycloalkyl, optional substituiertes C₃-C₈ Alkylcycloalkyl oder optional substituiertes C₅-C₁₀ Aryl. X in Formel (I) wird unabhängig aus S oder O ausgewählt.

Der Begriff "Alkyl" betrifft vollständig gesättigte aliphatische, lineare oder verzweigte Kohlenwasserstoffe. In bestimmten Ausführungsformen umfasst ein Alkyl 1 bis 18 Kohlenstoffatome. Ein numerischer Bereich von zum Beispiel 1 bis 18 bedeutet, wann immer er auftritt, dass, zum Beispiel, C₁-C₁₈ Alkyl eine Alkylgruppe betrifft, die 1 Kohlenstoffatom, 2, 3, 4, 5, 6, 7, 8, 9, 10, 11, 12, 13, 14, 15, 16, 17 bzw. 18 Kohlenstoffatome umfasst. Die Alkylgruppe kann optional substituiert sein. Beispiele von Alkyl-Verbindungen beinhalten, sind aber nicht darauf beschränkt, Methyl, Ethyl, n-Propyl, Isopropyl, n-Butyl, Isobutyl, sek.-Butyl, tert.-Butyl, Pentyl, Hexyl, Heptyl, Octyl und ähnliche.

Der Begriff "Alkenyl" betrifft aliphatische Kohlenwasserstoffe mit einer oder mehreren Doppelbindungen. In bestimmten Ausführungsformen umfasst ein Alkenyl 2 bis 6 Kohlenstoffatome, d.h. 2, 3, 4, 5 oder 6 Kohlenstoffatome. Die Alkenylgruppe kann optional substituiert sein. Beispiele von Alkenyl-Verbindungen beinhalten, sind aber nicht darauf beschränkt, Ethenyl, Propenyl, 1,4-Butadienyl und ähnliche.

Der Begriff "Alkoxy" betrifft aliphatische Kohlenwasserstoffe mit einer -O-Alkyl-Einheit. In bestimmten Ausführungsformen umfasst ein Alkoxy 1 bis 4 Kohlenstoffatome, d.h. 1, 2, 3 oder 4 Kohlenstoffatome. Die Alkoxygruppe kann optional substituiert sein. Beispiele von Alkoxy-Verbindungen beinhalten, sind aber nicht darauf beschränkt, Methoxy, Ethoxy, Propoxy, tert.-Butoxy und ähnliche.

Der Begriff "Cycloalkyl" betrifft cyclische gesättigte Kohlenwasserstoffe. In bestimmten Ausführungsformen umfasst ein Cycloalkyl 5 bis 8 Kohlenstoffatome, d.h. 5, 6, 7 oder 8 Kohlenstoffatome. Die Cycloalkylgruppe kann optional substituiert sein. Beispiele von Cycloalkyl-Verbindungen beinhalten, sind aber nicht darauf beschränkt, Cyclopentan, Cyclohexan, Cycloheptan, Cyclooktan und ähnliche.

Der Begriff "Alkylcycloalkyl" betrifft cyclische gesättigte Kohlenwasserstoffe, die über eine Alkylgruppe an den Hauptcyclus gebunden sind. In bestimmten Ausführungsformen umfasst ein Alkylcycloalkyl 3 bis 8 Kohlenstoffatome, d.h. 3, 4, 5, 6, 7 oder 8 Kohlenstoffatome. Die Alkylcycloalkylgruppe kann optional substituiert sein. Beispielsweise kann mindestens 1 Ringatom ein Heteroatom ist. Das mindestens eine Heteroatom kann aus Sauerstoff, Stickstoff, Schwefel und Phosphor ausgewählt werden, ist aber nicht darauf beschränkt. Beispiele von Alkylcycloalkyl-Verbindungen beinhalten, ohne darauf beschränkt zu sein, Glycidyl, Benzyl und ähnliche.

Der Begriff "Aryl" betrifft einen aromatischen Ring, bei dem jedes Ringatom ein Kohlenstoffatom ist. Arylringe können aus fünf, sechs, sieben, acht, neun, zehn oder mehr Kohlenstoffatomen aufgebaut sein. Zum Beispiel können Arylverbindungen bis zu 15 Kohlenstoffatome besitzen. Die Arylgruppe kann optional substituiert sein. Beispiele von Aryl-Verbindungen beinhalten, sind aber nicht darauf beschränkt, Cyclopentadienyl, Phenyl, und ähnliche. Unter die allgemeine Definition von Aryl können auch Heteroaryle fallen. Der Begriff "Heteroaryl" betrifft einen aromatischen Heterocyclus, wobei die Heteroarylringe aus 5, 6, 7, 8, 9 oder mehr Atomen aufgebaut sein können, wobei mindestens 1 Ringatom ein Heteroatom ist. Das mindestens eine Heteroatom kann aus Sauerstoff, Stickstoff, Schwefel und Phosphor ausgewählt werden, ist aber nicht darauf beschränkt. Die Heteroarylgruppe kann optional substituiert sein. Beispiele von Heteroaryl-Verbindungen beinhalten, sind aber nicht darauf beschränkt, Furan, Pyridin, Thiophen und ähnliche.

Der Begriff "optional substituiert" betrifft eine Gruppe, bei der ein oder mehr Wasserstoffatome durch einen Substituenten ersetzt sind. Der Substituent kann Alkyl, Alkoxy, Cycloalkyl, Aryl, Heteroaryl, OH, CN, F, Cl, Br, I, NO₂ oder ein Amin sein, ist aber nicht darauf beschränkt.

In einer Ausführungsform der vorliegenden Erfindung sind R₁, R₂ und R₃ unabhängig voneinander -CH₃, -CH₂CH₃, -CH₂CH₂CH₃, -CH₂CHCH₃; -CH₂OH, -CH₂CH₂OH, -CH₂CH₂CH₂OH, -CH₂(C₂H₃O).

In einer Ausführungsform ist X = O.

Beispielhafte Isocyanurate sind, ohne darauf beschränkt zu sein, 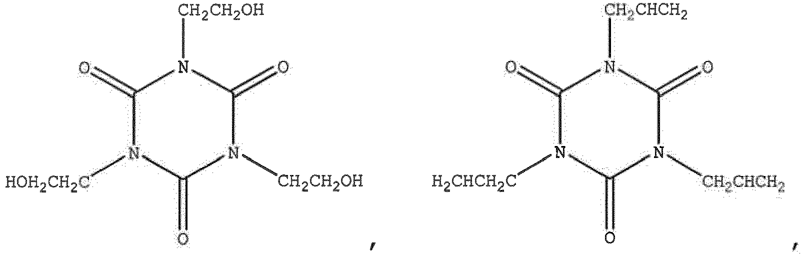 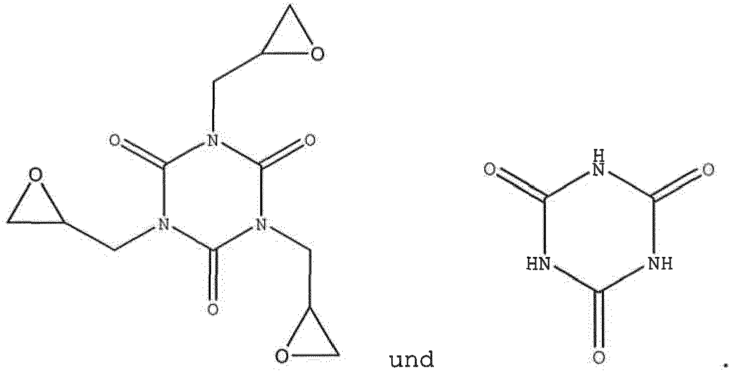 In einer Ausführungsform der vorliegenden Erfindung ist das Isocyanurat

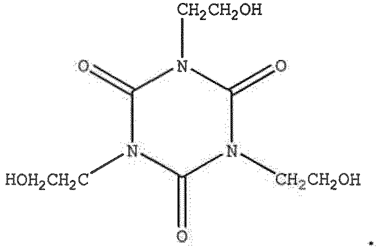

Die auf Isocyanurat basierenden schwermetallfreien Stabilisatorzusammensetzungen für halogenhaltige Polymere gemäß der vorliegenden Erfindung enthalten mindestens ein Dihydropyridin, das aus den Verbindungen der Formel (II) und (III) 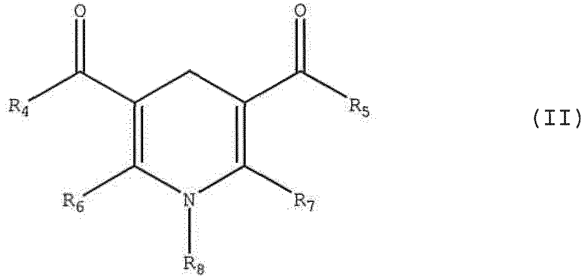 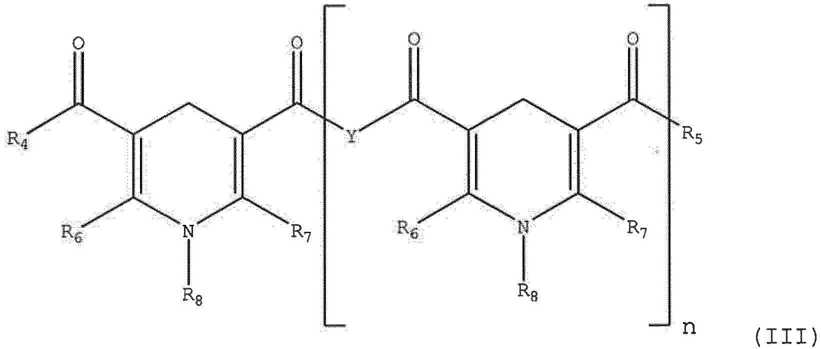 ausgewählt wird. R₄, R₅, R₆, R₇ und R₈ sind unabhängig voneinander H, optional substituiertes C₁-C₁₈ Alkyl, optional substituiertes C₂-C₆ Alkenyl, optional substituiertes C₁-C₄ Alkoxy, optional substituiertes C₅-C₈ Cycloalkyl oder optional substituiertes C₅-C₁₀ Aryl, gemäß den oben angegebenen Definitionen.

Y ist C₁-C₁₈ Alkyl, wobei ein oder mehrere Kohlenstoffe durch O oder S substituiert sein können. So kann in einer Ausführungsform der Erfindung Y aus (CH₂)ₓ, (CH₂)ₓ-O-(CH₂)_{y} und (CH₂)ₓ-S-(CH₂)_{y} ausgewählt werden, wobei x und y unabhängig eine ganze Zahl von 1 bis 10, d.h. 1, 2, 3, 4, 5, 6, 7, 8, 9 oder 10 sind. In einer Ausführungsform sind x und y jeweils 1, 2 oder 3.

n ist eine ganze Zahl von 1 bis 5, zum Beispiel 1, 2, 3, 4 oder 5. In einer Ausführungsform ist n 1, 2 oder 3.

In einer Ausführungsform der vorliegenden Erfindung können R₄, R₅, R₆, R₇ und R₈ unabhängig aus -CH₃, -C₂H₅, -C₈H₁₇, -C₁₆H₃₃, -C₁₇H₃₅, -C₁₈H₃₇, -C₆H₅, -OCH₃, -OC₂H₅, -OC₁₂H₂₅ ausgewählt werden.

Beispielhafte Dihydropyridine sind, ohne darauf beschränkt zu sein, 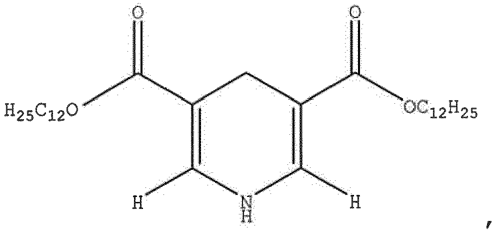 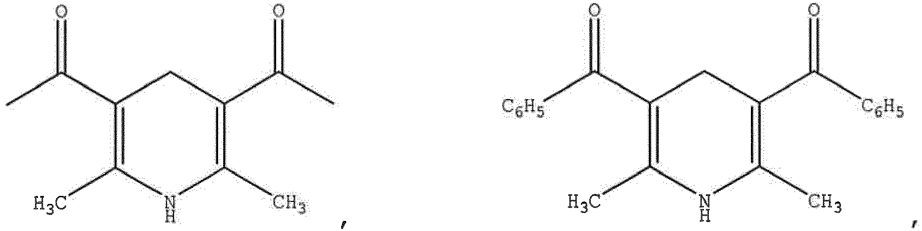 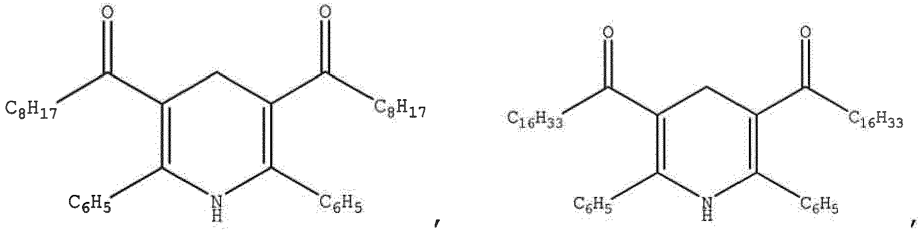 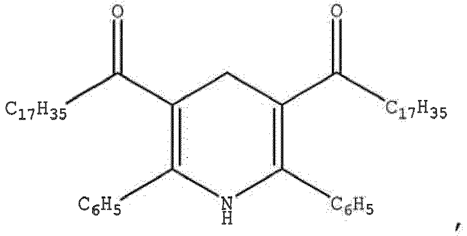 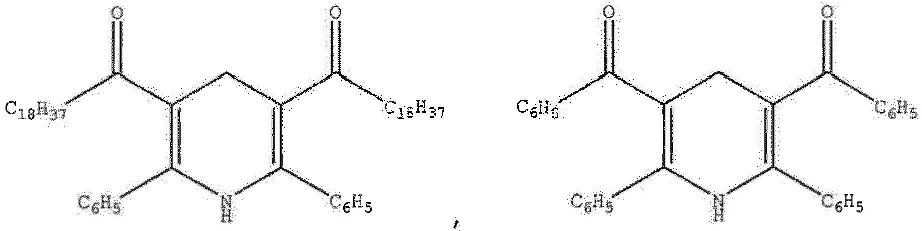 oder

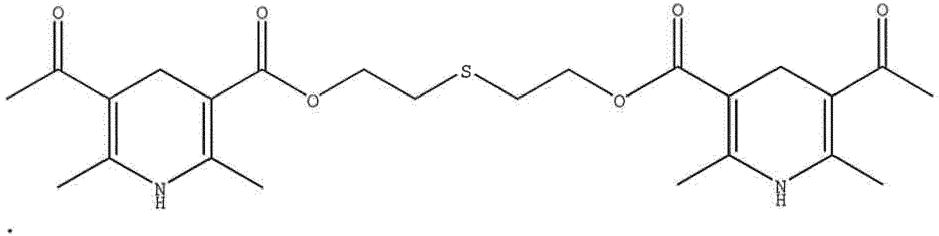

Die auf Isocyanurat basierenden schwermetallfreien Stabilisatorzusammensetzungen für halogenhaltige Polymere gemäß der vorliegenden Erfindung enthalten mindestens ein Perchlorat, das aus den Verbindungen der allgemeinen Formeln (IV) und (V)

M(ClO₄)ₖ (IV)

MₓAl₂(OH)₂ₓ₊₄(CO₃)_{1-z/2}(ClO₄)_{z}·mH₂O (V)

ausgewählt wird.

M steht für ein schwermetallfreies Metallatom. Zum Beispiel kann M aus Li, Na, K, Mg, Ca oder Al ausgewählt werden. In einer Ausführungsform ist M Na, Mg oder Al.

k ist eine ganze Zahl von 1 bis 3, zum Beispiel 1, 2 oder 3. x ist eine ganze Zahl von 1 bis 6, zum Beispiel 1, 2, 3, 4, 5 oder 6. z ist eine Zahl im Bereich von 0.01 bis 2.

Die Verbindungen der Formel (V) können beispielhaft als Mineralien wie Hydrotalcite, Hydrocalumite, Ettringite, Granate, Dawsonite bezeichnet werden. M kann in einer Ausführungsform Li, Na, K, Mg oder Ca sein.

Beispielhafte Perchlorate sind, ohne darauf beschränkt zu sein, NaClO₄, Ca(ClO₄)₂, Mg(ClO₄)₂ oder Al(ClO₄)₃. Weitere Beispielhafte Verbindungen dieser Gruppe sind Alcamizer 5 und Alcamizer 5-2 der Firma Kyowa.

In der vorliegenden Erfindung bedeutet "auf Isocyanurat basierenden", dass die Hauptkomponente der Stabilisatorzusammensetzung ein oder mehrere Isocyanurat(e) sind. Unter Hauptkomponenten versteht man die Komponenten, die zur Stabilisierung des halogenhaltigen Polymers hauptsächlich beitragen, d.h. die genannten Komponenten Isocyanurat, Dihydropyridin und Perchlorat-Salz. Eventuell weitere vorhandene stabilisierend wirkende Komponenten sind in einer geringeren Menge enthalten. In einer Ausführungsform der vorliegenden Erfindung enthält die auf Isocyanurat basierende Stabilisatorzusammensetzung keine Uracile und/oder Aminocrotonate.

Stabilisatorzusammensetzung gemäß der vorliegenden Erfindung können in unterschiedlichen Mengen zu dem halogenhaltigen Polymer hinzugegeben werden. Das Dihydropyridin wird in einer Menge von 0.1 bis 0.5 Teile pro 100 Teile Harz ("per hundred resin" = phr) hinzugegeben. In einer Ausführungsform kann das Dihydropyridin zum Beispiel in einer Menge von 0.1 bis 0.3 phr, d.h. zum Beispiel 0.1, 0.15, 0.2, 0.25 oder 0.3 phr zugegeben werden. Das Isocyanurat wird in einer Menge von ungefähr 0, 1 bis 1,5 Teile pro 100 Teile Harz (phr) hinzugegeben. In einer Ausführungsform kann das Isocyanurat in einer Menge von beispielsweise 0.5, 0.6, 0.7, 0.8, 0.9, 1.0, 1.1, 1.2, 1.3, 1.4 oder 1.5 phr zugegeben werden. Das Perchlorat wird in einer Menge von 0.05 bis 0.2 Teile pro 100 Teile Harz (phr) hinzugegeben. In einer Ausführungsform kann das Perchlorat in einer Menge von zum Beispiel 0.1, 0.15, oder 0.2 phr zugegeben werden. Jede der oben angegebenen Werte kann als Anfangswert bzw. Endwert eines Bereichs angenommen werden.

Jegliche Kombinationen der oben genannten Mengenangaben sind in der vorliegenden Erfindung möglich.

Die Stabilisatorzusammensetzung gemäß der vorliegenden Erfindung kann insgesamt in einer Menge von ungefähr 0.01 bis ungefähr 10.0 Teile pro 100 Teile Harz (phr) hinzugegeben werden. In einer Ausführungsform wird die Stabilisatorzusammensetzung in einer Menge von ungefähr 0.05 bis ungefähr 8.0 phr hinzugegeben, beispielsweise in einer Menge von ungefähr 0.5 bis ungefähr 5.0.

Die erfindungsgemäß verwendete schwermetallfreie Stabilisatorzusammensetzung kann einzeln zum Polymer oder zur Polymermischung hinzugegeben werden. Es ist aber auch möglich, die erfindungsgemäße schwermetallfreie Kombination zusammen mit anderen (Co)-Stabilisatoren oder den unten aufgeführten Hilfsstoffen zum dem Polymer oder einem Polymergemisch hinzuzugeben. Zum Beispiel ist eine Dosierung im Extruder, z.B. in der Vakuumzone, ebenfalls von der vorliegenden Erfindung umfasst.

Die erfindungsgemäße schwermetallfreie Stabilisatorzusammensetzung kann weiterhin mit einem oder mehreren zusätzlichen Additiven, wie zum Beispiel Primärstabilisatoren, Co-Stabilisatoren, Zeolithe, Antioxidantien, Füllstoffe, Weichmacher, Farbstoffe, Pigmente, Antistatikmittel, oberflächenaktive Agenzien, Schaumbildner, Schlagzähmodifizierer, UV-Stabilisatoren, Gleitmittel, Verarbeitungsmittel oder dergleichen, kombiniert werden.

Co-Stabilisatoren sind Verbindungen die einen weiteren stabilisierenden Beitrag für halogenhaltige Polymere liefern, wenn in der Stabilisatorzusammensetzung gemäß der vorliegenden Erfindung verwendet. Mögliche Co-Stabilisatoren können aus der Gruppe, die aus 1,3-Diketonverbindungen, Polyolen, Metallsalzen, natürlichen oder synthetischen Mineralien wie Hydrotalcite, Hydrocalumite und Zeolite, Aminosäurederivaten, organischen Estern der phosphorigen Säure, Epoxyverbindungen besteht, ausgewählt werden.

Beispiele für 1,3-Diketonverbindungen beinhalten, sind aber nicht darauf beschränkt, Dibenzoylmethan, Stearoylbenzoylmethan, Palmitoylbenzoylmethan, Myristoylbenzoylmethan, Lauroylbenzoylmethan, Benzoylaceton, Acetylaceton, Tribenzoylmethan, Diacetylacetobenzol, p-Methoxystearoylacetophenon, Acetoessigsäureester und Acetylaceton sowie deren Metallsalze, insbesondere die des Lithiums, Natriums, Kaliums, Calciums, Magnesiums, Titans und/oder Aluminiums.

Co-Stabilisatoren aus der Gruppe der Polyole beinhalten, sind aber nicht darauf beschränkt, Glycerin, Pentaerythrit, Di- und Tripentaerythrit, Trismethylolpropan (TMP), Di-TMP, Sorbitol, Mannitol, Malititol, Saccharide, Disacchariden (insbesondere Saccharose, 4-O-β-D-Galactopyranosyl-D-glucose, 4-O-alpha-D-Glucopyranosyl-D-glucose, 6-O-(6-deoxy-alpha-L-Mannopyranosyl)-D-glucose, alpha-D-Glucopyranosyl-alpha-D-glucopyranosid, 6-O-alpha-D-Glucopyranosyl-D-glucose, 4-O-β-D-Glucopyranosyl-D-glucose, 2-O-β-D-Glucopyranosyl-D-glucose, 6-O-alpha-D-Glucopyranosyl-D-glucitol, 3-O-alpha-D-Glucopyranosyl-D-fructose, 6-O-β-D-Glucopyranosyl-D-glucose, 4-O-β-D-Galactopyranosyl-D-glucitol, 4-O-alpha-D-Glucopyranosyl-D-glucitol, 6-O-alpha-D-Galactopyranosyl-D-glucose, 3-O-alpha-D-Galactopyranosyl-D-myo-inositol, 4-O-β-D-Galactopyranosyl-D-fructose, 4-O-β-D-Galactopyranosyl-β-D-glucopyranose, 6-O-alpha-D-Glucopyranosyl-D-fructose, 4-O-β-D-Galactopyranosyl-alpha-D-glucopyranose, 2-O-(6-Deoxy-alpha-L-mannopyranosyl)-D-glucose, 4-O-alpha-D-Glucopyranosyl-D-fructose, 2-O-β-D-Glucopyranosyl-alpha-D-glucopyranose, 1-O-alpha-D-Glucopyranosyl-D-mannitol, 6-O-(6-Deoxy-alpha-L-mannopyranosyl)-β-D-glucopyranose, 2-O-β-D-Glucopyranosyl-β-D-glucopyranose, 6-O-alpha-D-Glucopyranosyl-alpha-D-glucopyranose, 2-O-alpha-D-Glucopyranosyl-alpha-D-glucopyranose, 2-O-alpha-D-Glucopyranosyl-β-D-glucopyranose, 1-O-alpha-D-Glucopyranosyl-D-fructose, 6-O-alpha-D-Glucopyranosyl-alpha-D-fructofuranose, 6-O-alpha-D-Glucopyranosyl-D-glucitol, 4-O-β-D-Galactopyranosyl-D-glucitol, 4-O-alpha-D-Glucopyranosyl-D-glucitol, 1-O-alpha-D-Glucopyranosyl-D-mannitol), Trisaccharide, Polysaccharide, insbesondere Polyvinylalkohole, Stärke, Cellulose und deren Partialester.

Beispiele für Antioxidantien beinhalten, sind aber nicht darauf beschränkt, Alkylphenole, Hydroxyphenylpropionate, Hydroxybenzylverbindungen, Alkylidenbisphenole, Thiobisphenole und Aminophenole, insbesondere z.B. 2,6-Di-tert.-butyl-4-methyl-phenol, 2,6-Di-benzyl-4-methyl-phenol, Stearyl-3-(3'-5'-di-tert.-butyl-4'-hydroxy-phenyl)propionat, 4,4'-Thiobis-(3-methyl-6-tert.-butyl-phenol), 4-Nonylphenol, 2,2'-Methylenbis(4-methyl-6-tert.-butylphenol), 2,5-Di-tert.-butylhydrochinon, 4,4',4"-(1-Methyl-1-propanyl-3-ylidene)tris[2-(1,1-dimethylethyl)-5-methyl-phenol, deren neutrale oder basischen Lithium-, Magnesium-, Calcium- und Aluminiumsalze, sowie sterisch gehinderte Amine und/oder Phosphonite sowie Mischungen davon.

Beispiele für Co-Stabilisatoren aus der Gruppe der Metallsalze beinhalten, sind aber nicht darauf beschränkt, Hydroxide, Oxide, Carbonate, basische Carbonate und Carbonsäuresalze von Lithium, Natrium, Kalium, Magnesium, Calcium, Aluminium, Titanium und ähnliche, so lange kein Schwermetall verwendet wird. In einer Ausführungsform der vorliegenden Erfindung können die Metallsalze Salze von höheren Carbonsäuren, zum Beispiel C₆-C₂₂ Carbonsäuren, sein, wie zum Beispiel Stearin-, Palmitin-, Myristin-, Laurin-, Öl-, Olein- und Rizinolsäure.

Beispiel für natürliche und synthetische Mineralien beinhalten, sind aber nicht darauf beschränkt, A3-, A4-, A5-Zeolithe, Zeolithe vom Mordenit, Erionit-, Faujasit X- oder Y-Typ sowie ZSM-5-Zeolithe, Hydrotalcite (vom Alcamizer 1- und 4-Typ) und/oder Gemische davon.

Beispiele für Co-Stabilisatoren aus der Gruppe der Aminosäurederivate beinhalten, sind aber nicht darauf beschränkt, Glycin, Alanin, Lysin, Tryptophan, Acetylmethionin, Pyrrolidoncarbonsäure, α-Aminocrotonsäure, α-Aminoacrylsäure, α-Aminoadipinsäure und ähnliche, sowie die entsprechenden Ester davon. Die Alkoholkomponenten dieser Ester können einwertige Alkohole, wie zum Beispiel Methylalkohol, Ethylalkohol, Propylalkohol, i-Propylalkohol, Butylalkohol, α-Ethylhexanol, Oktylalkohol, i-Oktylalkohol, Laurylalkohol, Stearylalkohol und ähnliche umfassen, sowie Polyole, wie zum Beispiel Ethylenglycol, Propylenglycol, 1,3-Butandiol, 1,4-Butandiol, Glycerol, Diglycerol, Trismethylolpropan, Pentaerythritol, Dipentaerythritol, Erythrithol, Sorbitol, Mannitol und ähnliche.

Beispiele für Co-Stabilisatoren aus der Gruppe der Ester der phosphorigen Säure beinhalten, sind aber nicht darauf beschränkt, Triarylphosphite, wie zum Beispiel Triphenylphosphit, Tris(p-nonylphenyl)phosphit; Alkylarylphosphite, wie zum Beispiel Monoalkyldiphenylphosphite, z.B. Diphenylisooctylphosphit, Diphenylisodecylphosphit; und Dialkylmonophenylphosphite, wie zum Beispiel Phenyldiisooctylphosphit, Phenyldiisodecylphosphit; und Trialkylphosphite, wie Triisooctylphosphit, Tristearylphosphit und ähnliche.

Beispiele für Co-Stabilisatoren aus der Gruppe der Epoxyverbindungen beinhalten, sind aber nicht darauf beschränkt, verschiedene tierische oder pflanzliche öle, wie zum Beispiel Epoxysojaöl, Epoxyrapsöl, epoxidierte Carbonsäureester, wie zum Beispiel epoxidiertes Epoxymethyloleat, Epoxybutyloleat, epoxidierte alicyclische Verbindungen, Glycidether, wie zum Beispiel Bisphenol-A-diglycidether, Bisphenol-F-diglycidether; Glycidester, wie Glycidylacrylat, Glycidylmethacrylat, deren Polymere, Copolymere; und epoxidierte Polymere, wie epoxidiertes Polybutadien, epoxidiertes ABS, und ähnliche.

Beispielhaft sei zudem Kreide oder gecoatete Kreide als Füllstoffe benannt, wobei die Füllstoffe nicht darauf beschränkt sind.

Eine weitere Komponente, die der Stabilisatorzusammensetzung der Erfindung hinzugegeben werden kann ist Titandioxid. Titandioxid tritt im Wesentlichen in der Natur in drei Modifikationen auf: Anatas, Brookit und Rutil.

Sowohl als Anatas als auch als Rutil besitzt Titandioxid technische Bedeutung als Pigment. Die hohen Brechungsindices von 2.55 (Anatas) und 2.75 (Rutil) begründen das Aufhell- und Deckvermögen und somit den Einsatz als Weißpigment. Rutil absorbiert bei entsprechender Dosierung alles Licht unter 400 nm, also den gesamten UV-Bereich. Die Absorption des Anatas ist etwas zu kürzeren Wellenlängen verschoben. Brookit wiederum zeigt keinerlei photokatalytische Aktivität.

Für Außenanwendungen hat das Titaniumdioxid vorteilhafterweise Rutil-Struktur. Für alle anderen Anwendungen kann es sowohl Anatas- als auch Rutilstruktur haben.

Das Titandioxid kann erfindungsgemäß in einer Menge von ungefähr 0.01 bis ungefähr 20 phr in der Stabilisatorzusammensetzung verwendet werden. In einer anderen Ausführungsform kann das Titandioxid in einer Menge von ungefähr 0.05 bis ungefähr 10.0 phr oder von ungefähr 0.1 bis ungefähr 5 phr verwendet werden, zum Beispiel in einer Menge von ungefähr 4 phr. Das Titandioxid sollte in fein verteilt und gut dispergierbar vorliegen.

Paraffinwachs kann beispielhaft als ein Gleitmittel verwendet werden. In einer Ausführungsform kann das Paraffinwachs ein Gemisch aus Alkanen mit der allgemeinen Summenformel CₙH₂ₙ₊₂ sein. n ist eine ganze Zahl von 20 bis 100. Das Gemisch kann sowohl aus geradkettigen und ungeradkettigen Komponenten als auch aus rein geradkettigen Komponenten bestehen. Beispiele für Paraffinwachse beinhalten, sind aber nicht darauf beschränkt, Naftolube FTM und damit verwandte Verbindungen.

Füllstoffe können in einer Menge von ungefähr 0 bis ungefähr 100 phr oder von ungefähr 1 bis ungefähr 50 phr verwendet werden. In einer Ausführungsform der vorliegenden Erfindung können Füllstoffe in einer Menge von ungefähr 2 bis ungefähr 20 phr verwendet werden. Weichmacher können in einer Menge von ungefähr 0 bis ungefähr 100 phr, zum Beispiel von ungefähr 0.05 bis ungefähr 50 phr. Gleitmittel können von ungefähr 0.05 bis ungefähr 3 phr, zum Beispiel von ungefähr 0.1 bis ungefähr 2 phr verwendet werden.

Die weiteren oben angegeben Co-Stabilisatoren können in zu den Gleitmitteln identischen Mengen verwendet werden.

Um halogenhaltige Polymere mit der erfindungsgemäßen Stabilisatorzusammensetzung zu verarbeiten, können die im Stand der Technik bekannten Verfahren verwendet werden. Beispiele für derartige Verfahren beinhalten, sind aber nicht darauf beschränkt, Kalandrieren, Extrudieren, Spritzgießen, Blasformen und ähnliche.

Aus den gemäß der Erfindung hergestellten, stabilisierten halogenhaltigen Polymeren können verschiedenste Produkte für unterschiedliche Anwendungen hergestellt werden. Beispielsweise können mit den stabilisierten Polymeren gemäß der Erfindung Fensterprofile, Rohre, Fußbodenbeläge, Dachbahnen, Kabel und Folien hergestellt werden. Zudem können die Polymere in Werkstoffen beispielsweise auch für Sportboote, Rotorblätter für Windkraftanlagen und im Waggonbau verwendet werden.

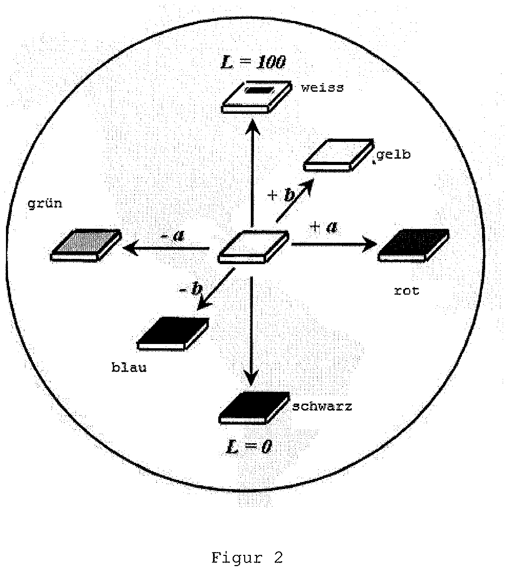

Um die Farbeigenschaften der so hergestellten halogenhaltigen Polymere und Produkte daraus, die die erfindungsgemäße Stabilisatorzusammensetzung enthalten, zu beurteilen, wird das CIE-Lab-System verwendet. Das CIE-Lab-System ist ein von der Internationalen Beleuchtungskomission (*Commission Internationale de l*'*Eclairage*, CIE) 1976 festgelegter Farbraum. In diesem dreidimensionalen Farbraum sind drei Achsen definiert (L = Helligkeit (0 = Schwarz, 100 = Weiß); a = Rot-Grün (-120 = Grün, +120 = Rot); b = Gelb-Blau (-120 = Blau, +120 = Gelb)). Durch die Angaben der L*a*b*-Werte sowie der Angaben über Farbmessgerät (Spektralphotometer), Lichtart, Beobachter, Farbsystem und Probenvorbereitung lässt sich eine Farbe genau bestimmen und archivieren (siehe Diagramm in Figur 2). Somit repräsentiert der a-Wert die Farbe auf der grün-rot-Achse. Negative a-Werte zeigen einen Grünstich und positive einen Rotstich. Je höher der a-Wert ist umso stärker ist der Rotstich. Daher ist ein möglichst neutraler Wert für a bzw. eine möglichst geringfügige Änderung dieses Wertes in der vorliegenden Erfindung wünschenswert.

Die vorliegende Erfindung liefert demzufolge einen bemerkenswerten und neuen Beitrag zur Entwicklung des Standes der Technik, insbesondere für die Verarbeitung und Stabilisierung von PVC und anderen halogenhaltigen thermoplastischen Polymeren.

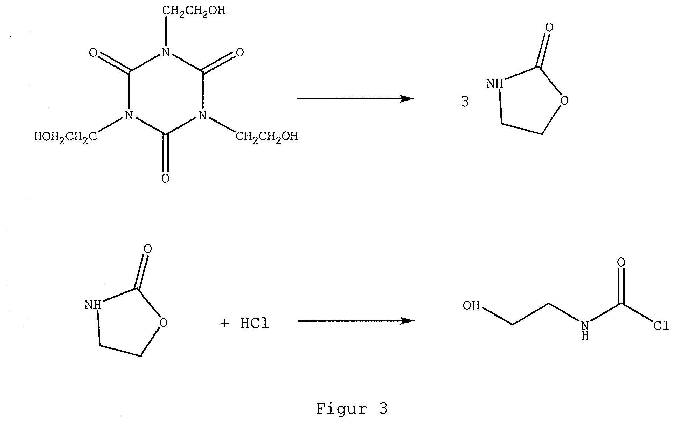

Es wird angenommen, ohne sich auf eine genaue Theorie festlegen zu wollen, dass unter anderem der in Figur 3 aufgezeigte Reaktionsmechanismus zur stabilisierenden Wirkung der erfindungsgemäßen Stabilisatorzusammensetzung beiträgt. Beispielsweise kann das verwendete THEIC zu einem Oxazolidinon umwandeln, welches wiederum das freigesetzte HCl binden kann.

Zwar ist gegenwärtig bekannt, dass DHP nur mit Zn-Komponenten wirkt, in der vorliegenden Erfindung ist jedoch überraschenderweise eine Wirksamkeit auch ohne Zn zu beobachten. Perchlorat wird, ohne sich auf eine genaue Theorie festlegen zu wollen, reduziert.

Die Wirksamkeit der vorliegenden Stabilisatorzusammensetzung ergibt sich aus einer synergistischen Wechselwirkung der darin enthaltenen Komponenten auf das halogenhaltige Polymer.

Die Erfindung wird durch die nachfolgenden Beispiele näher veranschaulicht, ohne jedoch darauf beschränkt zu sein.

### Beispiele:

### 1.) Beispiele 1-14

In den nachfolgenden Beispielen werden verschiedene Zusammensetzungen von PVC-Formkörpern beschrieben. Zu deren Herstellung wurden neben 100 phr S-PVC (Solvin 267; k = 67), 5 phr Kreide mit Oberflächenbehandlung (Hydrocorb 95), 4 phr Titandioxide (Kronos 2220; Rutil) und 7 phr Impactmodifier auf Acrylatbasis (KM 355) die in den Beispielen genannten Bestandteile eingewogen. Alle Komponenten wurden in einem Heißmischer innerhalb von 5 min. auf 120°C erhitzt, danach 24 h gelagert und anschließend 90 min. auf einem parallelen 25 mm-Doppelschneckenextruder der Firma Göttfert extrudiert. Die einzelnen Zusammensetzungen sind in der folgenden Tabelle 1 wiedergegeben.

**Tab. 1 Ergebnisse in PVC**

| Beispiel | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| | neg* | neg* | eg* | neg* | neg* | neg* | neg* | neg* | eg* | eg* | eg* | eg* | eg* | eg* |
| *Gleitmittel:* | | | | | | | | | | | | | | |
| Naftolube FTM (Paraffin, Fa. Chemson) | | | 0,65 | 0,65 | 0,65 | 0,65 | 0,65 | 0,65 | 0,65 | 0,65 | 0, 65 | 0,65 | 0,65 | 0,65 |
| ListabCa (Calciumstearat) | | | 0,30 | 0,30 | 0,30 | 0,30 | 0,30 | 0,30 | 0,30 | 0,30 | 0,30 | 0, 30 | 0,30 | 0,30 |
| Naftolube ELK (Esterwachs, Fa Chemson) | | | 0,20 | 0,20 | 0,20 | 0,20 | 0,20 | 0,20 | 0,20 | 0,20 | 0,20 | 0,20 | 0,20 | 0,20 |
| Paraloid K125 (Fa. Rohm & Haas) | | | 1,00 | 1,00 | 1,00 | 1,00 | 1,00 | 1,00 | 1,00 | 1,00 | 1,00 | 1,00 | 1,00 | 1,00 |
| *Säurefänger*: | | | | | | | | | | | | | | |
| Alcamizer 1 (Fa. Kyowa) | | | 0,40 | 0,40 | 0,40 | 0,40 | 0,40 | 0,40 | 0,40 | 0,40 | 0,40 | 0,40 | 0,40 | 0,40 |
| *Antioxidans:* | | | | | | | | | | | | | | |
| Irganox 1076 (Fa. Ciba) | | | 0,15 | 0,15 | 0,15 | 0,15 | 0,15 | 0,15 | 0,15 | 0,15 | 0,15 | 0,15 | 0,15 | 0,15 |
| | | | | | | | | | | | | | | |
| *Stabilisatoren:* | | | | | | | | | | | | | | |
| Handelsübliche Stabilisator-Gleitmittelkombination der Fa. Chemson auf Bleibasis | 5,00 | | | | | | | | | | | | | |
| Handelsübliche Stabilisator-Gleitmittelkombination der Fa. Chemson auf Calcium-Zink-Basis | | 4,00 | | | | | | | | | | | | |
| | | | | | | | | | | | | | | |
| THEIC | | | 1,00 | 1,00 | 1,00 | 1,00 | 1,00 | | 1,00 | 1,00 | 1,00 | 1,20 | 1,50 | 1,50 |
| NaPerchlorat 55%ig | | | 0,10 | 0,10 | 0,10 | 0,10 | 0,10 | 0,10 | 0,20 | 0,10 | 0,20 | 0,10 | 0,20 | 0,10 |
| Stavinor D507 (Fa . Arkema) | | | 0,20 | | | | | 0,20 | 0,20 | 0,30 | 0,30 | 0,20 | 0,10 | 0,30 |
| BGAC | | | | | 0,20 | | | | | | | | | |
| DMAU | | | | | | 0,20 | | | | | | | | |
| DBM | | | | | | | 0,20 | | | | | | | |
| ATMER 163 (Fa. Ciba) | | | | | | | | 1,00 | | | | | | |
| | | | | | | | | | | | | | | |
| DHC in min. | 80,0 | 40,0 | 39,0 | 31,0 | 39,5 | 34,5 | 40,5 | 47,0 | 45,0 | 38,5 | 45,0 | 40,0 | 52,5 | 38,5 |
| L-Wert | 94,5 | 93,8 | 95,7 | 95,1 | 95,3 | 95,0 | 94,7 | 95,5 | 95,6 | 96,1 | 95,7 | 95,7 | 95,2 | 95,9 |
| a-Wert | -0,1 | -0,7 | -0,9 | -0,5 | -0,5 | -0,4 | -0,4 | -1,1 | -0,9 | -1,0 | -1,1 | -0,9 | -0,5 | -1,0 |
| b-Wert | 3,9 | 3,3 | 3,4 | 4,1 | 4,0 | 3,2 | 4,3 | 4,7 | 3,3 | 3,0 | 2,9 | 3,2 | 3,1 | 2,6 |
| Anfangsfarbe (Yellownessindex) | 9,4 | 7,1 | 7,0 | 9,1 | 8,2 | 7,5 | 9,4 | 10,2 | 7,0 | 6,9 | 6,9 | 7,0 | 7,0 | 6,8 |
| Farbhaltung nach 30 min. (Yellownessindex) | 17,0 | 16,7 | 13,5 | 23,3 | 20,2 | 14,2 | 14,4 | 32,4 | 13,7 | 12,7 | 12,9 | 13,1 | 12,7 | 11,9 |
| | | | | | | | | | | | | | | |
| a-Wert (abs.) nach 10d Bandol Wheel | -0.1 | -0.4 | -0.5 | 0.0 | 0.3 | 1.2 | 0.0 | 0.1 | -0.5 | -0.6 | -0.8 | -0.5 | -0.1 | -0.7 |
| Δa nach 10 Tagen Bandol Wheel | 0.0 | 0.3 | 0.5 | 0.5 | 0.8 | 1.6 | 0.4 | 1.2 | 0.4 | 0.4 | 0.4 | 0.4 | 0.4 | 0.3 |

| | | | | | | | | | | | | | | |
|---|---|---|---|---|---|---|---|---|---|---|---|---|---|---|
| *eg = erfindungsgemäß; neg = nicht erfindungsgemäß; BGAC = Butylenglycoldiaminocrotonat; DMAU = Dimethyl-4-aminouracil; DBM = Dibenzyolmethan (Rhodiastab 83) | | | | | | | | | | | | | | |

### Erläuterungen zu den in Tabelle 1 aufgeführten Ergebnissen:

Zunächst sei angemerkt, dass der Yellowness-Index (YI) eine Maßzahl für den Grad der Vergilbung der Probe ist. Die Anfangsfarbe gibt dabei den Wert für die jeweilige Probe vor der thermischen Belastung an. Der Wert der Farberhaltung wird nach 30 min bei thermischer Belastung bei 180°C gemessen. Ein Vergleich der Werte gibt die Veränderungen in der Probe an.

Beispiele 1 und 2 sind Commodities der Fa. Chemson, die schwermetallhaltige Stabilisatorzusammensetzungen gemäß dem Stand der Technik darstellen und die Eigenschaften des PVC bei deren Verwendung aufzeigen.

Beispiel 3 entspricht einem Beispiel mit einer schwermetallfreien Stabilisatorzusammensetzung gemäß der vorliegenden Erfindung. Im Vergleich zu den nicht erfindungsgemäßen Beispielen 1 und 2 des Stands der Technik zeigt sich insbesondere, dass sich mit der erfindungsgemäßen Stabilisatorzusammensetzung zumindest ein Eigenschaftsbild einstellen lässt, das mit bleifreien Systemen vergleichbar ist, aber auf jegliche Schwermetallverbindung verzichtet. Zudem weist die erfindungsgemäße Stabilisatorzusammensetzung in Beispiel 3 Vorteile auf, indem das erhaltene Polymer einen L-Wert zeigt, der um mehr als 1 größer ist als bei den Polymeren der Beispiele 1 und 2. Die Farbhaltung nach 30 min. ist ebenfalls deutlich besser, was in einem niedrigeren Yellowness-Index von 13.5 gegenüber 17.0 bzw. 16.7 der Beispiele 1 und 2 zu erkennen ist.

Das nicht erfindungsgemäße Beispiel 4 unterscheidet sich vom erfindungsgemäßen Beispiel 3 durch das weglassen des Dihydropyridins (DHP). Dadurch sinkt die Dehydrochlorierung (DHC), die ein Maß für die statische Thermostabilität ist, bei der gemessen wird, wann HCl aus dem halogenhaltigen Polymer freigesetzt wird, d.h. die Stabilisatorkombination verbraucht ist, und die Anfangsfarbe verschlechtert sich bzgl. YI (von 7.0 auf 9.1) und b-Wert (von 3.4 auf 4.1) signifikant. Auch die Farbhaltung ist deutlich schlechter als im erfindungsgemäßen Beispiel 3.

Im nicht erfindungsgemäßen Beispiel 5 wurde anstelle des DHP das Aminocrotonat BGAC eingesetzt. Wie aus den Werten der Beispiele 3 und 5 ersichtlich, ist die Stabilisatorzusammensetzung mit BGAC der erfindungsgemäßen Stabilisatorzusammensetzung mit DHP sowohl in der Anfangsfarbe als auch in der Farberhaltung deutlich unterlegen.

Im nicht erfindungsgemäßen Beispiel 6 wird DMAU anstelle der erfindungsgemäßen Komponente DHP genutzt. Die Anfangsfarbe (7.5 gegenüber 7.0) und Farbhaltung des Polymers (14.2 gegenüber 13.5) in Beispiel 6 sind schlechter als im erfindungsgemäßen Beispiel 3. Insbesondere der L-Wert ist niedriger. Aber auch mit DHC ist Beispiel 6 dem erfindungsgemäßen Beispiel 3 merklich unterlegen.

Im nicht erfindungsgemäßen Beispiel 7 wurde DBM anstelle der erfindungsgemäßen Komponente DHP genutzt. Auch das Polymer von Beispiel 7 ist dem Polymer mit der erfindungsgemäßen Stabilisatorzusammensetzung in Anfangsfarbe (insbesondere im L- und im b-Wert sowie im Yellowness-Index) unterlegen.

Im nicht erfindungsgemäßen Beispiel 8 wurde die erfindungsgemäße Komponente THEIC gegen das nicht erfindungsgemäße ATMER 163 (N-Stearyl-N,N-diethanolamin) ausgetauscht. Die Anfangsfarbe des Polymers (insbesondere im b-Wert und Yellowness-Index) ist deutlich schlechter. Die Farbhaltung ist zudem weit unter dem, was der Stand der Technik in den Beispielen 1 und 2 fordert.

Die erfindungsgemäßen Beispiele 9 bis 14, in denen die Perchlorat-, die DHP- und die THEIC-Komponente variiert wurden, bestätigen die Überlegenheit der Stabilisatorkomponente der vorliegenden Erfindung im Vergleich zu den bleifreien, nicht erfindungsgemäßen Beispielen 4 bis 8.

Aus den oben angegebenen Extrudaten wurden 2 cm breite Streifen herausgeschnitten und 48 Stunden im aus dem Stand der Technik bekannten Bandol Wheel (siehe zum Beispiel www.metrastat.com) unter folgenden Bedingungen bestrahlt:
- eine Umdrehung pro Stunde
- 120° der Umdrehung abgeschattet
- 120° der Umdrehung in einem Wasserbecken mit dest. Wasser
- (jeweils 60° der Abschattung sind in der Luft bzw. im dest. Wasser)
- 50°C im Probenraum
- 400 W Quecksilbermitteldrucklampe

Außerdem wurden von den Extrudaten auch Streifen in den Xenotest gegeben, um die natürliche Bewitterung normgerecht zu simulieren. Der Xenotest dient dazu, die Lichtechtheit von PVC-Profilen zu kontrollieren. Die zu untersuchenden Teile werden der intensiven Bestrahlung durch Xenon-Licht ausgesetzt und dabei im Wechsel jeweils dem Licht oder dem Schatten zugewandt. Die farbliche Änderung der Oberfläche wird in Abständen genau überprüft.

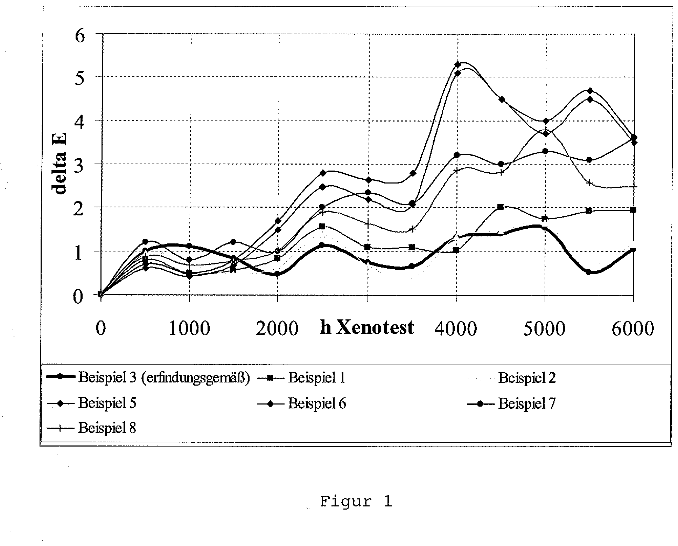

Die Bewitterung erfolgte durch gefilterte Xenonbogenbestrahlung entsprechend der EN ISO 11341:1994. Im Xenotest Alpha wurden die Proben bei einer Probenraumtemperatur von 40°C, einer relativen Feuchtigkeit von 60% (in der trockenen Phase) und einer Bestrahlungsstärke von 60 W/m² bestrahlt. Als Phasenzeiten wurden 102 min Trocken und 18 min Regensimulation mit destilliertem Wasser gewählt (Wendelauf). In regelmäßigen Abständen wurden die L a b-Werte und die Gesamtfarbänderung ΔE, die in Fig. 1 dargestellt ist, gemessen. Aus Fig. 1 wird deutlich, dass das erfindungsgemäße Beispiel 3 in der künstlichen Bewitterung mit den nicht erfindungsgemäßen Beispielen 1 und 2 vergleichbar ist. Deshalb eignet sich Beispiel 3 für die Verwendung in Anwendungen, die natürlicher Bewitterung (z.B. Fenster oder Dachrinnen) ausgesetzt sind. Die nicht erfindungsgemäßen Beispiele 5 bis 8 sind dem erfindungsgemäßen Beispiel 3 deutlich unterlegen. Große Unterschiede treten nach ca. 2500 bis 3000 h Stunden auf. Es sei außerdem darauf hingewiesen, dass die nicht erfindungsgemäßen Beispiele 5 und 6, die DMAU bzw. BGAC anstelle der erfindungsgemäßen Komponente DHP enthalten, nicht die Norm für weiße Fensterprofile erfüllen würden. Bei 4000 h wird ein ΔE von >5 erreicht.

In Bezug auf die gemessenen a-Werte kann beobachtet werden, dass die nicht erfindungsgemäßen Beispiele 1 und 2 nach der Prüfung auf Rosaverfärbung Δa von 0.0 bzw. 0.3, wobei die absoluten a-Werte < 0 bleiben. D.h. man findet einen Grünstich vor.

Die nicht erfindungsgemäßen Beispiele 5, 6 und 8 weisen die größten Δa-Werte auf, wobei die absoluten a-Werte > 0 sind. D.h. man findet einen Rotstich vor.

Demgegenüber weisen alle erfindungsgemäßen Beispiele Δa-Werte von 0.3 bis 0.4 auf, wobei die absoluten a-Werte im grünen Bereich, d.h. < 0 bleiben. Damit zeigt sich, dass die Stabilisatorzusammensetzungen der vorliegenden Erfindung klare Vorteile haben gegenüber den Zusammensetzungen des Stands der Technik. Zudem zeigen die vorliegenden Ergebnisse, dass die erfindungsgemäßen Beispiele durchaus mit den Commodities in ihrer Tendenz zur Nicht-Rosaverfärbung vergleichbar sind.

### 2.) Beispiele 15-22

In den nachfolgenden Beispielen 15-22 werden verschiedene Zusammensetzungen von PVC-Formkörpern beschrieben. Zu deren Herstellung wurden neben 100 phr S-PVC (Solvin 267; k = 67), 5 phr Kreide mit Oberflächenbehandlung (Hydrocorb 95) die in den Beispielen genannten Bestandteile eingewogen. Alle Komponenten wurden in einem Heißmischer innerhalb von 5 min. auf 120°C erhitzt, danach 24 h gelagert und anschließend 90 min. auf einem parallelen 25 mm-Doppelschneckenextruder der Firma Göttfert extrudiert. Die einzelnen Zusammensetzungen sind in der folgenden Tabelle 2 wiedergegeben.

**Tabelle 2:**

| Beispiel | 15 | 16 | 17 | 18 | 19 | 20 | 21 | 22 |
|---|---|---|---|---|---|---|---|---|
| | eg* | eg* | eg* | neg* | neg* | neg* | neg* | neg* |
| *Gleitmittel:* | | | | | | | | |
| Naftolube FTM | 0,65 | 0,65 | 0,65 | 0,65 | 0,65 | 0,65 | 0,65 | 0,65 |
| ListabCa (Calciumstearat) | 0,30 | 0,30 | 0,30 | 0,30 | 0,30 | 0,30 | 0,30 | 0,30 |
| Naftolube ELK | 0,20 | 0,20 | 0,20 | 0,20 | 0,20 | 0,20 | 0,20 | 0,20 |
| | | | | | | | | |
| *Stabilisatoren:* | | | | | | | | |
| THEIC | 0,50 | 1,00 | 1,00 | 1,00 | 1,00 | 1,00 | 1,00 | 1,00 |
| NaPerchlorat 55%ig | 0,10 | 0,10 | 0,10 | 0,10 | | 0,10 | 0,10 | 0,10 |
| Stavinor D507 | 0,20 | 0,20 | 0,40 | | 0,20 | | | |
| BGAC | | | | | | 0,20 | | |
| DMAU | | | | | | | 0,20 | |
| DBM | | | | | | | | 0,20 |
| | | | | | | | | |
| DHC in min. | 31 | 37 | 40 | 35 | 21 | 40 | 36 | 37 |
| L-Wert | 88,8 | 88,2 | 89,3 | 87,0 | 87,9 | 86,8 | 87,8 | 86,8 |
| a-Wert | -2,2 | -2,0 | -1,8 | -0,1 | -1,9 | -1,0 | -0,2 | 0,0 |
| b-Wert | 12,0 | 10,6 | 10,1 | 14,4 | 11,2 | 15,8 | 12,9 | 14,5 |
| Anfangsfarbe (Yellownessindex) | 7,6 | 15,2 | 13,1 | 20,4 | 16,2 | 27,2 | 18,2 | 29,0 |
| Farbhaltung nach 30 min. (Yellownessindex) | 28,4 | 19,0 | 20,3 | 36,5 | 25,5 | 34,4 | 22,4 | 27,8 |

| | | | | | | | | |
|---|---|---|---|---|---|---|---|---|
| *eg = erfindungsgemäß; neg = nicht erfindungsgemäß | | | | | | | | |

Die erfindungsgemäßen Kombinationen in Beispiel 15 bis 17 zeigen, dass
- THEIC die Thermostabilität im DHC erhöht (Vgl. Beispiel 15 zu Beispiel 16)
- DHP 507 die Thermostabilität im DHC erhöht (Vgl. Beispiel 16 zu Beispiel 17).

Wird die notwendige Komponente DHP 507 weggelassen (siehe nicht erfindungsgemäßes Beispiel 18 im Vergleich zum erfindungsgemäßen Beispiel 16), so sinkt die Thermostabilität DHC, die Probe wird dunkler (= L-Wert sinkt) und gelber (b-Wert steigt). Außerdem kann beobachtet werden, dass die Anfangsfarbe und die Farbhaltung schlechter wird.

Wird die erfindungsgemäße Komponente NaClO₄ weggelassen (siehe nicht erfindungsgemäßes Beispiel 19 im Vergleich zum erfindungsgemäßen Beispiel 16), so fällt die Thermostabilität fast auf die Hälfte zurück und die Farbhaltung wird etwas schlechter.

Ersetzt man die erfindungsgemäße Komponente DHP 507 in Beispiel 16 durch BGAC (siehe nicht erfindungsgemäßes Beispiel 20 im Vergleich zum erfindungsgemäßen Beispiel 16), so wird etwas mehr Thermostabilität DHC erreicht, aber die Probe wird insgesamt dunkler (= L-Wert sinkt) und gelber (b-Wert steigt). Außerdem kann beobachtet werden, dass die Anfangsfarbe und die Farbhaltung schlechter wird.

Ersetzt man die erfindungsgemäße Komponente DHP 507 in Beispiel 16 durch DMAU (siehe nicht erfindungsgemäßes Beispiel 21 im Vergleich zum erfindungsgemäßen Beispiel 16), so wird eine vergleichbare Thermostabilität DHC erreicht, aber die Probe wird dunkler (= L-Wert sinkt) und gelber (b-Wert steigt). Außerdem kann beobachtet werden, dass die Anfangsfarbe und die Farbhaltung schlechter wird.

Ersetzt man die erfindungsgemäße Komponente DHP 507 in Beispiel 16 durch DBM (siehe nicht erfindungsgemäßes Beispiel 22 im Vergleich zum erfindungsgemäßen Beispiel 16), so wird eine vergleichbare Thermostabilität DHC erreicht, aber die Probe wird dunkler (= L-Wert sinkt) und gelber (b-Wert steigt). Außerdem kann beobachtet werden, dass die Anfangsfarbe und die Farbhaltung schlechter wird.

Damit zeigen auch diese Beispiele, dass die Stabilisatorzusammensetzungen der vorliegenden Erfindung klare Vorteile haben gegenüber den Zusammensetzungen des Stands der Technik.

## Patentansprüche

1. Halogenhaltiges Polymer mit einer schwermetallfreien, auf Isocyanurat basierenden Stabilisatorzusammensetzung enthaltend als Hauptkomponenten mindestens ein Isocyanurat,
mindestens ein Dihydropyridin und mindestens ein Perchloratsalz,
wobei das Isocyanurat in einer Menge von 0,5 bis 1,5 phr, das Dihydropyridin in einer Menge von 0,1 bis 0,5 phr und das Perchloratsalz in einer Menge von 0,05 bis 0,2 phr vorliegt, wobei das mindestens eine Perchlorat aus den Verbindungen mit den allgemeinen Formeln (IV) und (V)
M(ClO₄)ₖ (IV)
MₓAl₂(OH)₂ₓ₊₄(CO₃)_{1-z/2}(ClO₄)_{z}·mH₂O (V)
ausgewählt wird, wobei M für Li, Na, K, Mg, Ca oder Al steht; k eine ganze Zahl von 1 bis 3 ist; x eine ganze Zahl von 1 bis 6 ist; und z eine Zahl im Bereich von 0.01 bis 2 ist, und wobei jede eventuell weiter vorhandene stabilisierend wirkende Komponente jeweils in einer geringeren Menge als die Hauptkomponenten enthalten ist.

2. Polymer nach Anspruch 1, wobei das mindestens eine Isocyanurat aus den Verbindungen der Formel (I) 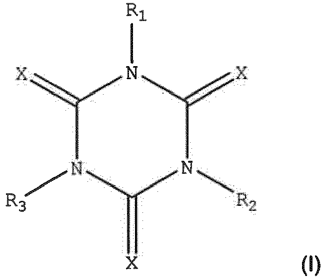 ausgewählt wird, wobei R₁, R₂ und R₃ unabhängig voneinander Wasserstoff, optional substituiertes C₁-C₁₈ Alkyl, optional substituiertes C₂-C₆ Alkenyl, optional substituiertes C₁-C₄ Alkoxy, optional substituiertes C₅-C₈ Cycloalkyl, optional substituiertes C₃-C₈ Alkylcycloalkyl oder optional substituiertes C₅-C₁₀ Aryl sind, und wobei X unabhängig voneinander S oder O ist.

3. Polymer nach Anspruch 2, wobei (1) R₁, R₂ und R₃ unabhängig voneinander aus -CH₃, -CH₂CH₃, -CH₂CHCH₃, -CH₂OH, -CH₂CH₂OH, -CH₂CH₂CH₃, -CH₂CH₂CH₂OH oder -CH₂(C₂H₃O) ausgewählt werden; und/oder (2) X = O ist.

4. Polymer nach einem der vorangegangenen Ansprüche, wobei das Isocyanurat aus der Gruppe, die aus 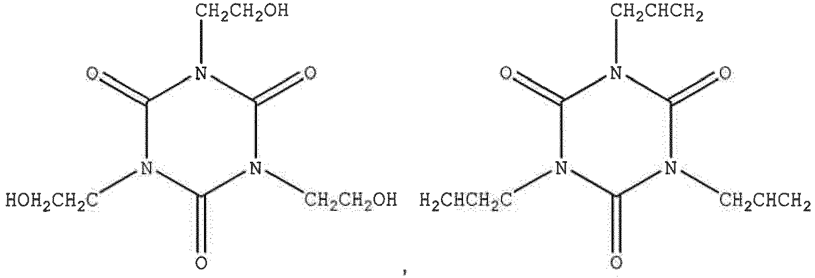 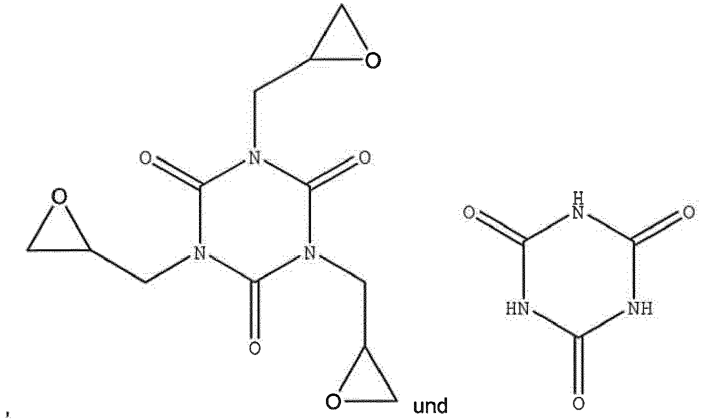 besteht, ausgewählt wird.

5. Polymer nach einem der vorangegangenen Ansprüche, wobei das mindestens eine Dihydropyridin aus den Verbindungen der Formel (II) und (III) 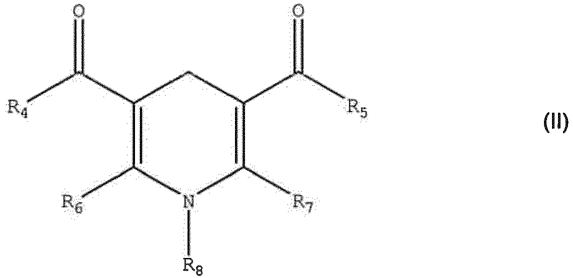 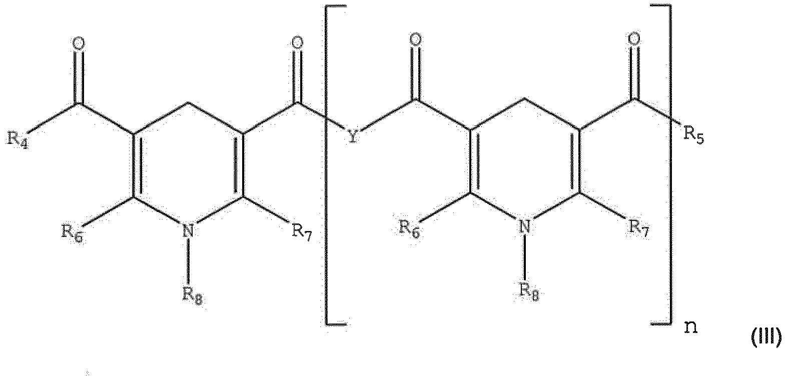 ausgewählt wird, wobei R₄, R₅, R₆, R₇ und R₈ unabhängig voneinander H, optional substituiertes C₁-C₁₈ Alkyl, optional substituiertes C₂-C₆ Alkenyl, optional substituiertes C₁-C₄ Alkoxy, optional substituiertes C₅-C₈ Cycloalkyl oder optional substituiertes C₅-C₁₀ Aryl sind; Y C₁-C₁₈ Alkyl ist, wobei ein oder mehrere Kohlenstoffe durch O oder S substituiert sein können; und n eine ganze Zahl von 1 bis 5 ist.

6. Polymer nach Anspruch 5, wobei (1) R₄, R₅, R₆, R₇ und R₈ unabhängig aus -CH₃, -C₂H₅, -C₈H₁₇, -C₁₆H₃₃, -C₁₇H₃₅, -C₁₈H₃₇, -C₆H₅, -OCH₃, -OC₂H₅, -OC₁₂H₂₅ ausgewählt werden; und/oder (2) Y aus (CH₂)ₓ, (CH₂)ₓ-O-(CH₂)_{y} und (CH₂)ₓ-S-(CH₂)_{y} ausgewählt wird, wobei x und y unabhängig eine ganze Zahl von 1 bis 10 sind.

7. Polymer gemäß einem der Ansprüche 5 bis 6, wobei das Dihydropyridin aus der Gruppe, die aus 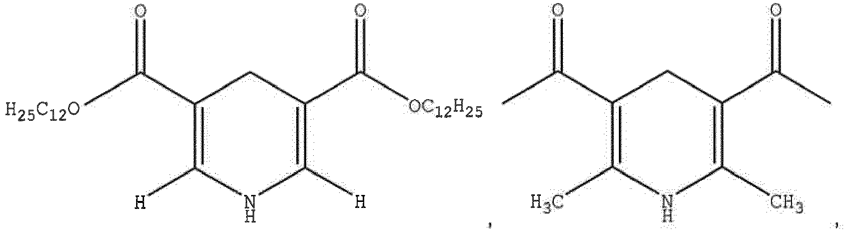 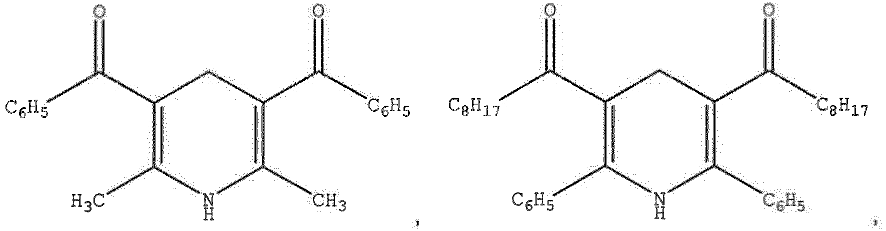 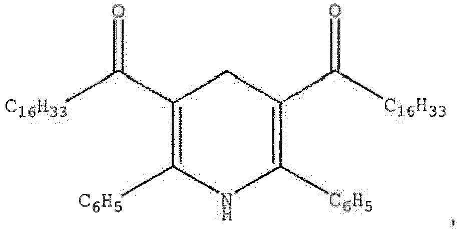 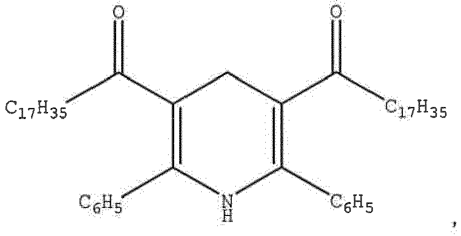 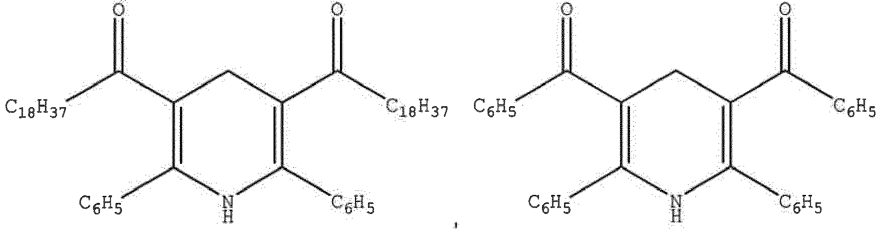 und 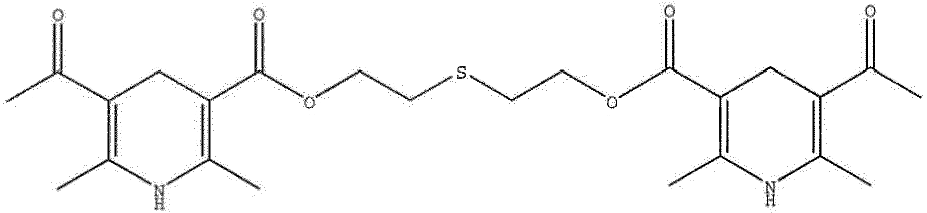 besteht, ausgewählt wird.

8. Polymer nach einem der vorangegangenen Ansprüche,
wobei das Perchlorat aus der Gruppe, die aus NaClO₄, Ca(ClO₄)₂, Mg(ClO₄)₂ und Al(ClO₄)₃ besteht, ausgewählt wird.

9. Polymer gemäß einem der vorangegangenen Ansprüche, wobei die Stabilisatorzusammensetzung in einer Menge von 0.01 bis 10.0 Teile pro 100 Teile Harz (phr) vorhanden ist, wobei die Stabilisatorzusammensetzung vorzugsweise in einer Menge von 0.05 bis 8.0 phr vorhanden ist.

10. Polymer gemäß einem der vorangehenden Ansprüche, wobei (1) die Stabilisatorzusammensetzung zusätzlich mindestens einen Co-Stabilisator enthält; (2) die Stabilisatorzusammensetzung zusätzlich Primärstabilisatoren, Zeolithe, Antioxidantien, Füllstoffe, Weichmacher, Farbstoffe, Pigmente, Antistatikamittel, oberflächenaktive Agenzien, Schaumbildner, Schlagzähmodifizierer und/oder UV-Stabilisatoren enthält; (3) das halogenhaltige Polymer PVC ist; und/oder (4) die Stabilisatorzusammensetzung keine Uracile und/oder Aminocrotonate enthält.

11. Verwendung einer Stabilisatorzusammensetzung wie sie in einem der Ansprüche 1 bis 10 definiert ist zur Stabilisierung von halogenhaltigen Polymeren.

12. Verwendung gemäß Anspruch 11, wobei die Stabilisierung gegenüber Lichteinwirkung ist.

13. Verwendung gemäß Anspruch 11 oder 12, wobei das halogenhaltige Polymer PVC ist.

14. Formkörper umfassend ein halogenhaltiges Polymer mit einer schwermetallfreien, auf Isocyanurat basierenden Stabilisatorzusammensetzung gemäß den Ansprüchen 1 bis 10.

15. Formkörper gemäß Anspruch 14, wobei der Formkörper Fensterprofile, Rohre, Fußbodenbeläge, Dachbahnen, Kabel und Folien sein kann.

## Claims

1. A halogen-containing polymer with an isocyanurate-based stabilizer composition which is free from heavy metals, containing, as main components, at least one isocyanurate, at least one dihydropyridine and at least one perchlorate salt, wherein the amount present of the isocyanurate is 0.5 to 1.5 phr, the amount present of the dihydropyridine is 0.1 to 0.5 phr and the amount present of the perchlorate salt is 0.05 to 0.2 phr, wherein the at least one perchlorate is selected from the compounds of the general formulae (IV) and (V)
M(ClO₄)ₖ (IV)
MₓAl₂(OH)₂ₓ₊₄(CO₃)_{1-z/2}(ClO₄)_{z}·mH₂O (V)
wherein M represents Li, Na, K, Mg, Ca or Al; k is an integer from 1 to 3; x is an integer from 1 to 6; and z is a number in the range of from 0.01 to 2, and wherein the amount present of any other stabilizing component that may be present is in each case smaller than that of the main components.

2. The polymer according to claim 1, wherein the at least one isocyanurate is chosen from the compounds of the formula (I) 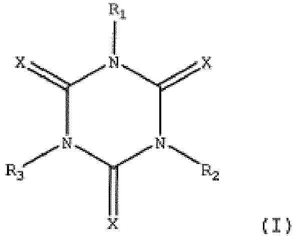 wherein R₁, R₂ and R₃ independently of each other are hydrogen, optionally substituted C₁-C₁₈ alkyl, optionally substituted C₂-C₆ alkenyl, optionally substituted C₁-C₄ alkoxy, optionally substituted C₅-C₈ cycloalkyl, optionally substituted C₃-C₈ alkylcycloalkyl or optionally substituted C₅-C₁₀ aryl, and wherein each X independently is S or O.

3. The polymer according to claim 2, wherein (1) R₁, R₂ and R₃ independently of each other are selected from -CH₃, -CH₂CH₃, -CH₂CHCH₃, -CH₂OH, -CH₂CH₂OH, -CH₂CH₂CH₃, -CH₂CH₂CH₂OH or -CH₂(C₂H₃O); and/or (2) X = O.

4. The polymer according to any one of the precedent claims, wherein the isocyanurate is selected from the group consisting of

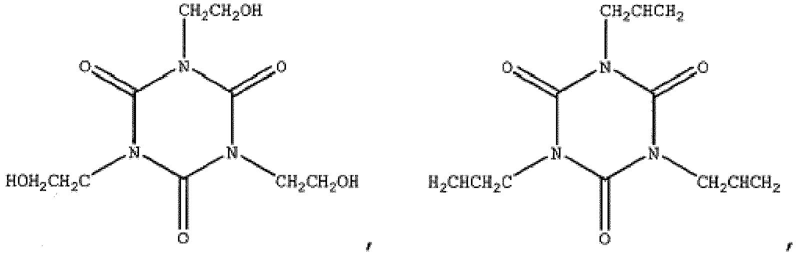

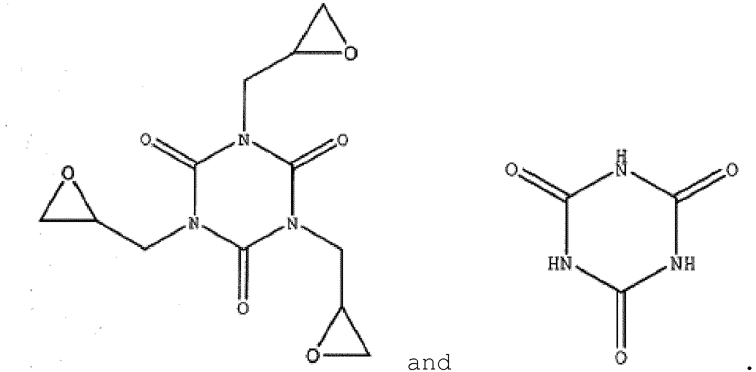

5. The polymer according to any one of the precedent claims, wherein the at least one dihydropyridine is selected from the compounds of formula (II) and (III) 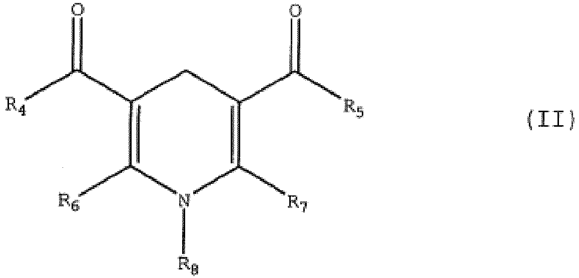 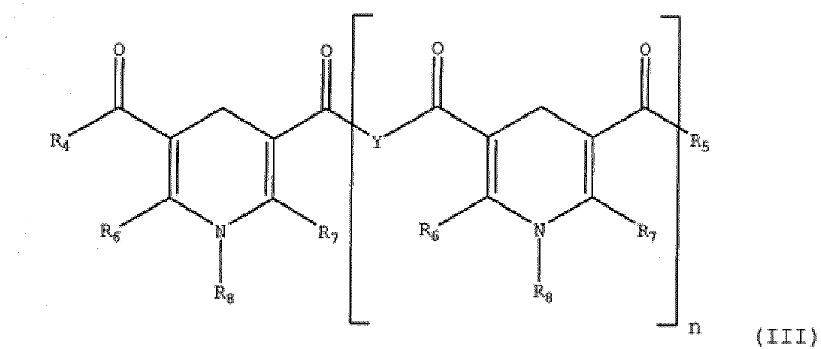 wherein R₄, R₅, R₆, R₇ and R₈ independently of each other are H, optionally substituted C₁-C₁₈ alkyl, optionally substituted C₂-C₆ alkenyl, optionally substituted C₁-C₄ alkoxy, optionally substituted C₅-C₈ cycloalkyl or optionally substituted C₅-C₁₀ aryl; Y is C₁-C₁₈ alkyl, wherein one or more carbons can be substituted by 0 or S; and n is an integer from 1 to 5.

6. The polymer according to claim 5, wherein (1) R₄, R₅, R₆, R₇ and R₈ are independently selected from -CH₃, -C₂H₅, -C₈H₁₇, -C₁₆H₃₃, -C₁₇H₃₅, -C₁₈H₃₇, -C₆H₅, -OCH₃, -OC₂H₅, -OC₁₂H₂₅ and/or (2) Y is selected from (CH₂)ₓ, (CH₂)ₓ-O-(CH₂)_{y} and (CH₂)ₓ-S-(CH₂)_{y}, wherein x and y independently are an integer from 1 to 10.

7. The polymer according to claim 5 or 6, wherein the dihydropyridine is selected from the group consisting of 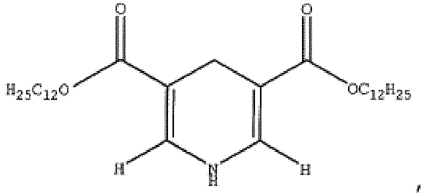 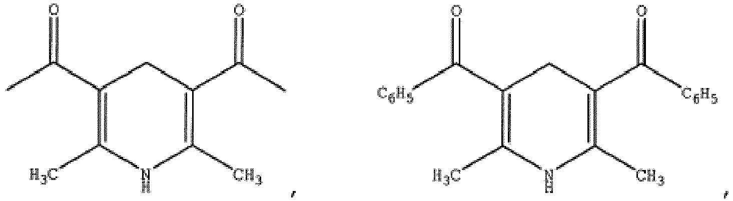 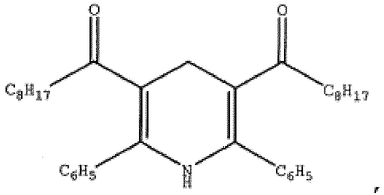 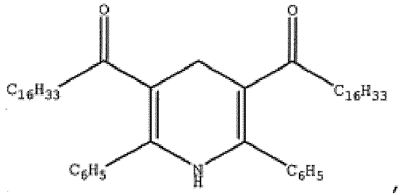 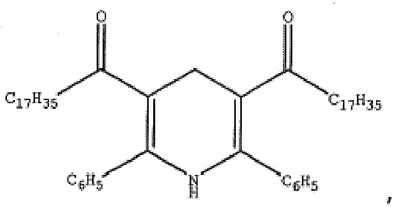 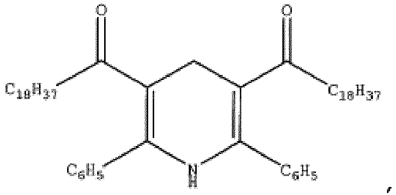 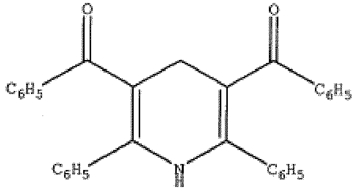 and

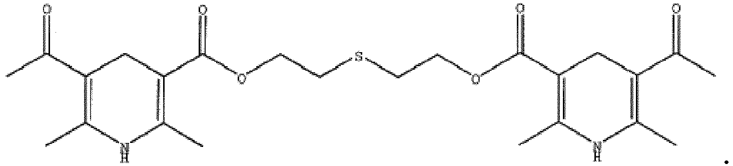

8. The polymer according to any one of the precedent claims, wherein the perchlorate is selected from the group consisting of NaClO₄, Ca(ClO₄)₂, Mg(ClO₄)₂ and Al(ClO₄)₃.

9. The polymer according to any one of the precedent claims, wherein the stabilizer composition is present in an amount of from 0.01 to 10.0 parts per 100 parts of resin (phr), wherein the stabilizer composition is preferably present in an amount of from 0.05 to 8.0 phr.

10. The polymer according to any one of the precedent claims, wherein (1) the stabilizer composition additionally contains at least one co-stabilizer; wherein (2) the stabilizer composition additionally contains primary stabilizers, zeolites, antioxidants, fillers, plasticizers, dyestuffs, pigments, antistatic agents, surface-active agents, foaming agents, impact modifiers and/or UV stabilizers (3) wherein the halogen-containing polymer is PVC; and/or (4) wherein the stabilizer composition contains no uracils and/or aminocrotonates.

11. Use of a stabilizer composition as defined in any one of claims 1 to 10 for stabilizing halogen-containing polymers.

12. Use according to claim 11, wherein the stabilization is against the action of light.

13. Use according to claim 11 or 12, wherein the halogen-containing polymer is PVC.

14. A shaped article comprising a halogen-containing polymer with an isocyanurate-based stabilizer composition which is free from heavy metals according to any of claims 1 to 10.

15. The shaped article according to claim 14, wherein the shaped article can be window profiles, pipes, floor coverings, roofing felts, cable and films.

## Revendications

1. Polymère halogéné présentant une composition stabilisatrice exempte de métaux lourds, à base d'un isocyanurate, contenant en tant que constituants principaux au moins un isocyanurate, au moins une dihydropyridine et au moins un sel perchlorate,
l'isocyanurate étant présent en une quantité de 0,5 à 1,5 phr, la dihydropyridine en une quantité de 0,1 à 0,5 phr et le sel perchlorate en une quantité de 0,05 à 0,2 phr, l'au moins un perchlorate étant choisi parmi les composés ayant les formules générales (IV) et (V)
M(ClO₄)ₖ (IV)
MₓAl₂(OH)₂ₓ₊₄(CO₃)_{1-z/2}(ClO₄)_{z}·mH₂O (V)
M représentant Li, Na, K, Mg, Ca ou Al ; k étant un nombre entier de 1 à 3 ; x étant un nombre entier de 1 à 6 ; et z étant un nombre compris dans la plage de 0,01 à 2, chaque constituant à effet stabilisant, éventuellement encore présent, étant contenu en une quantité plus faible que celle des constituants principaux.

2. Polymère selon la revendication 1, l'au moins un isocyanurate étant choisi parmi les composés de formule (I) 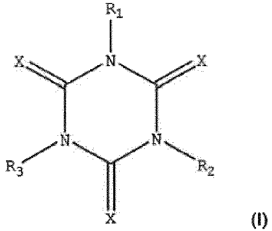 dans laquelle R₁, R₂ et R₃ représentent chacun indépendamment des autres un atome d'hydrogène, un groupe alkyle en C₁-C₁₈ éventuellement substitué, alcényle en C₂-C₆ éventuellement substitué, alcoxy en C₁-C₄ éventuellement substitué, cycloalkyle en C₅-C₈ éventuellement substitué, alkylcycloalkyle en C₃-C₈ éventuellement substitué ou aryle en C₅-C₁₀ éventuellement substitué, X représentant chacun indépendamment de l'autre S ou O.

3. Polymère selon la revendication 2, dans lequel (1) R₁, R₂ et R₃ sont chacun choisis indépendamment des autres parmi -CH₃, -CH₂CH₃, -CH₂CHCH₃, -CH₂OH, -CH₂CH₂OH, -CH₂CH₂CH₃, -CH₂CH₂CH₂OH ou -CH₂(C₂H₃O) ; et/ou (2) X = O.

4. Polymère selon l'une des revendications précédentes, l'isocyanurate étant choisi dans le groupe qui est constitué par 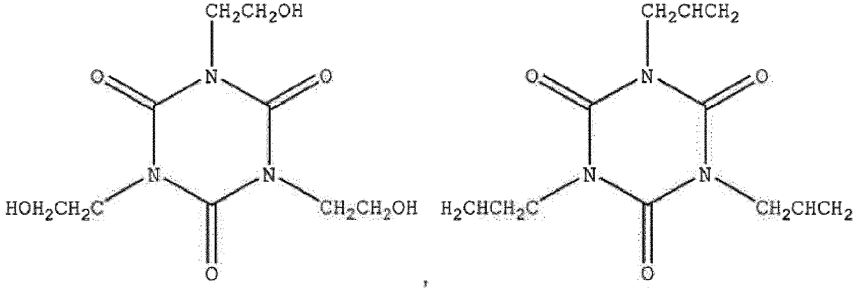 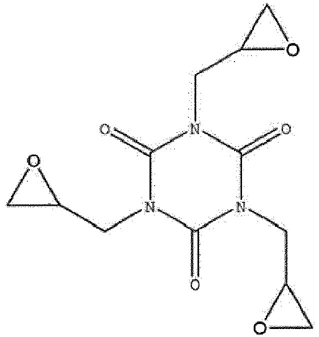 et par

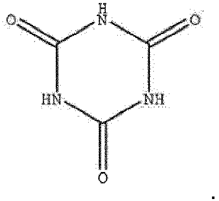

5. Polymère selon l'une des revendications précédentes, l'au moins une dihydropyridine étant choisie parmi les composés de formules (II) et (III) 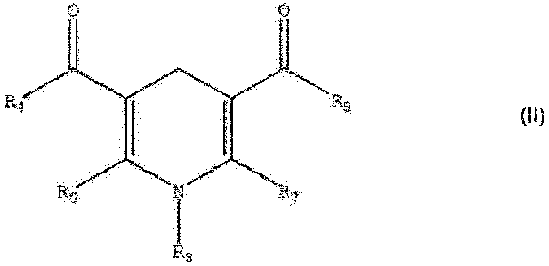 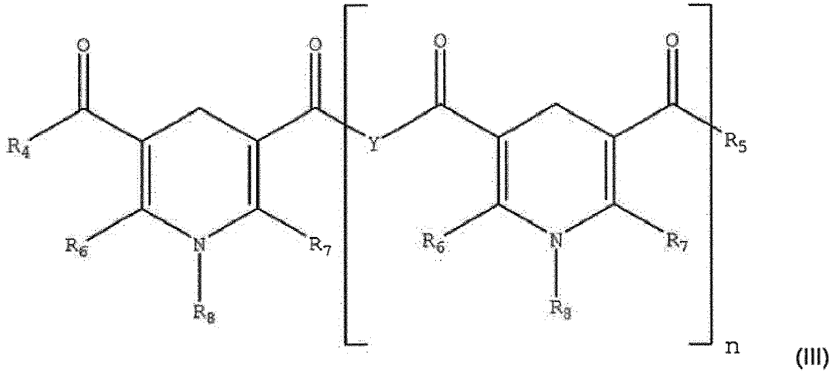 dans lesquelles R₄, R₅, R₆, R₇ et R₈ représentent chacun indépendamment des autres H, un groupe alkyle en C₁-C₁₈ éventuellement substitué, alcényle en C₂-C₆ éventuellement substitué, alcoxy en C₁-C₄ éventuellement substitué, cycloalkyle en C₅-C₈ éventuellement substitué ou aryle en C₅-C₁₀ éventuellement substitué ; Y représente un groupe alkyle en C₁-C₁₈, un ou plusieurs carbones pouvant être substitués par O ou S ; et n est un nombre entier de 1 à 5.

6. Polymère selon la revendication 5, dans lequel (1) R₄, R₅, R₆, R₇ et R₈ sont choisis indépendamment les uns des autres parmi -CH₃, -C₂H₅, -C₈H₁₇, -C₁₆H₃₃, -C₁₇H₃₅, -C₁₈H₃₇, -C₆H₅, -OCH₃, -OC₂H₅, -OC₁₂H₂₅ ; et/ou (2) Y est choisi parmi (CH₂)ₓ, (CH₂)ₓ-O-(CH₂)_{y} et (CH₂)ₓ-S-(CH₂)_{y}, x et y représentant indépendamment un nombre entier de 1 à 10.

7. Polymère selon l'une des revendications 5 à 6, la dihydropyridine étant choisie dans le groupe qui est constitué par 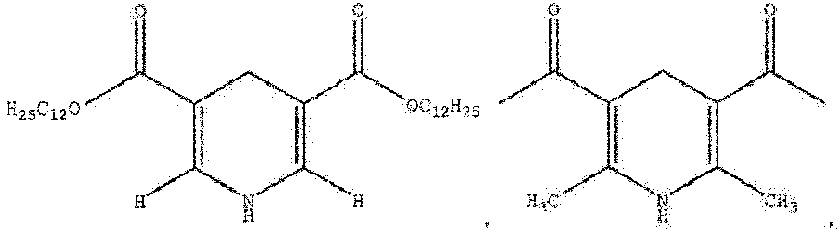 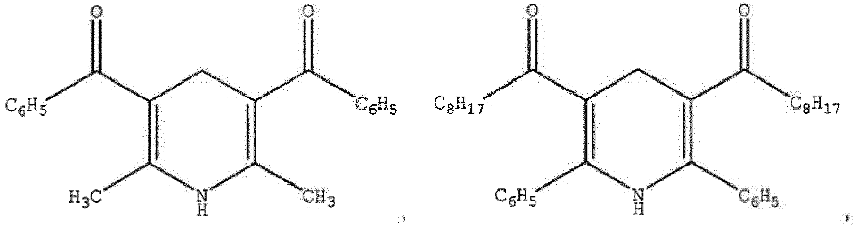 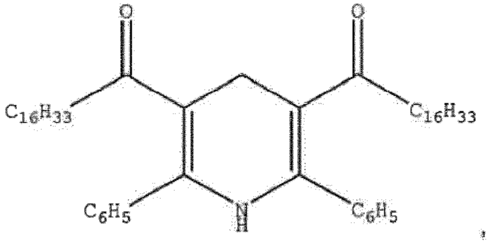 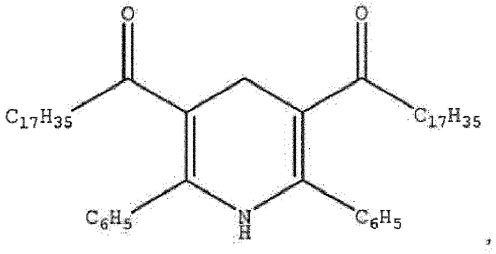 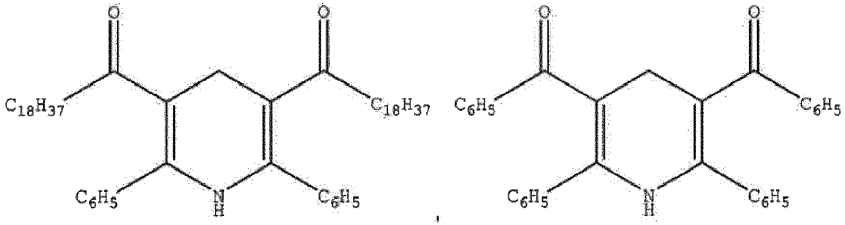 et par

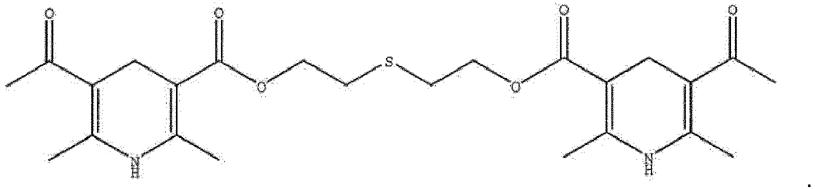

8. Polymère selon l'une des revendications précédentes, dans lequel le perchlorate est choisi dans le groupe constitué par NaClO₄, Ca(ClO₄)₂, Mg(ClO₄)₂ et Al(ClO₄)₃.

9. Polymère selon l'une des revendications précédentes, dans lequel la composition stabilisatrice est présente en une quantité de 0,01 à 10,0 parties pour 100 parties de résine (phr), la composition stabilisatrice étant présente de préférence en une quantité de 0,05 à 8,0 phr.

10. Polymère selon l'une des revendications précédentes, dans lequel (1) la composition stabilisatrice contient en outre au moins un co-stabilisant ; (2) la composition stabilisatrice contient en outre des stabilisants primaires, des zéolites, des antioxydants, des matières de charge, des plastifiants, des colorants, des pigments, des agents antistatiques, des agents tensioactifs, des agents moussants, des modifiants choc et/ou des stabilisants UV ; (3) le polymère halogéné est un PVC ; et/ou (4) la composition stabilisatrice ne contient pas d'uraciles ni/ou d'aminocrotonates.

11. Utilisation d'une composition stabilisatrice telle que définie dans l'une des revendications 1 à 10 pour la stabilisation de polymères halogénés.

12. Utilisation selon la revendication 11, dans laquelle la stabilisation agit contre l'effet de la lumière.

13. Utilisation selon la revendication 11 ou 12, dans laquelle le polymère halogéné est un PVC.

14. Objet moulé comprenant un polymère halogéné présentant une composition stabilisatrice exempte de métaux lourds, à base d'un isocyanurate, selon les revendications 1 à 10.

15. Objet moulé selon la revendication 14, l'objet moulé pouvant être des profils de fenêtres, des tubes, des revêtements de sol, des bandes de toit, des câbles ou des feuilles.
